# EUROPÄISCHE PATENTANMELDUNG

(11) **EP 3 636 491 A1**
(43) Veröffentlichungstag der Anmeldung: **15.04.2020**
(21) Anmeldenummer: 18199710.7
(22) Anmeldetag: 10.10.2018
(51) Int. Cl.: B60Q 1/26, H05B 33/08

(54) **FAHRZEUGLEUCHTE UND VERFAHREN ZU DEREN BETRIEB**

(71) Anmelder: odelo GmbH, 70329 Stuttgart (DE)
(72) Erfinder: HORNUNG, Thorsten, 73760 Ostfildern (DE); WILD, Julian, 70180 Stuttgart (DE); VOLLMER, Marco, 73728 Esslingen (DE)
(74) Vertreter: Benninger, Johannes

(57) **Zusammenfassung**

Es werden eine Fahrzeugleuchte und ein Verfahren zum Betrieb einer solchen Fahrzeugleuchte beschrieben. Die Fahrzeugleuchte ist mit mindestens einem wenigstens eine als eine Halbleiterlichtquelle (L1, L2) ausgeführte Lichtquelle umfassenden Leuchtmittel zur Erfüllung zumindest einer Lichtfunktion der Fahrzeugleuchte ausgestattet. Die Fahrzeugleuchte umfasst den Stromdurchfluss durch die wenigstens eine Halbleiterlichtquelle (L1, L2) steuernde Mittel (01), welche beim Einschalten der durch die wenigstens eine Halbleiterlichtquelle (L1, L2) ganz oder teilweise verwirklichten Lichtfunktion den Stromdurchfluss durch die wenigstens eine Halbleiterlichtquelle (L1, L2) zunächst auf einen überhöhten Wert regeln und dann nach einer vorgegebenen und/oder vorgebbaren Zeitspanne den Stromdurchfluss von dem überhöhten Wert auf einen Normalwert absenken. Das Verfahren zum Betrieb einer Fahrzeugleuchte mit mindestens einer vermittels wenigstens einer eine einem Stromdurchfluss durch sie hindurch proportionale Lichtabstrahlung aufweisenden Halbleiterlichtquelle (L1, L2) ganz oder teilweise verwirklichten Lichtfunktion sieht vor, dass mit dem Einschalten bzw. Aktivieren zu Beginn einer vermittels wenigstens einer Halbleiterlichtquelle (L1, L2) ganz oder teilweise verwirklichten Lichtfunktion die Halbleiterlichtquelle (L1, L2) zunächst mit einem überhöhten Wert des Stromdurchflusses anstelle eines Normalwerts beaufschlagt wird.

## Beschreibung

Die Erfindung betrifft eine Fahrzeugleuchte mit den Merkmalen des unabhängigen Anspruchs 1 sowie ein Verfahren zum Betrieb einer Fahrzeugleuchte mit den Merkmalen des unabhängigen Verfahrensanspruchs 6.

Eine Fahrzeugleuchte umfasst beispielsweise einen im Wesentlichen von einem Leuchtengehäuse und einer Lichtscheibe umschlossenen Leuchteninnenraum und mindestens ein darin beherbergtes, wenigstens eine Lichtquelle umfassendes Leuchtmittel für zumindest eine Lichtfunktion der Fahrzeugleuchte.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Für die einzelnen Lichtfunktionen sind zum Teil unterschiedliche Helligkeiten bzw. Sichtweiten sowie zum Teil unterschiedliche Lichtfarben zugeordnet.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Die Verkehrssicherheit wird maßgeblich beeinflusst von der Vorhersehbarkeit beabsichtigter Handlungen der am Straßenverkehr Beteiligten.

Zumindest zur Teilnahme am Straßenverkehr vorgesehene Fahrzeuge, allen voran Kraftfahrzeuge, sind daher mit Fahrzeugleuchten zur Erfüllung von beabsichtigte und stattfindende Handlungen im Straßenverkehr anzeigenden Lichtfunktionen ausgestattet.

Dabei ist die Sicht- und Wahrnehmbarkeit der Lichtfunktionen eines eigenen Fahrzeugs für andere am Straßenverkehr Beteiligte maßgeblich für eine nachhaltige Steigerung der Verkehrssicherheit.

Durch "Evaluation of rear lights in driving situations" von C. Ries, D. Polin, C. Schiller, T. Q. Khanh auf der ISAL 2017 ist bekannt, dass sich durch eine höhere Lichtintensität einer Lichtfunktion die Reaktionszeit des Menschen verringert. Auf der anderen Seite führt eine zu hohe Lichtintensität zur Blendung, wodurch ein Kompromiss zwischen Reaktionszeit und Blendung gefunden werden muss, um die Sicherheit im Straßenverkehr zu verbessern und zu optimieren.

Blendung wird oft unterschieden in "discomfort glare" und "disability glare". Als "discomfort glare" wird die Blendung durch eine unangenehm hell empfundene Lichtquelle bezeichnet, die jedoch die visuelle Wahrnehmung außerhalb dieser Lichtquelle nicht wesentlich beeinträchtigt. Der englische Begriff "disability glare" bezeichnet dagegen eine Blendung die die visuelle Wahrnehmung im gesamten Gesichtsfeld beeinträchtigt.

Im Rahmen der folgenden Beschreibung umfasst der Begriff beide Arten der Blendung. In der Praxis relevant ist dabei insbesondere die als "discomfort glare" bezeichnete Blendung.

Besondere relevant ist der erwähnte Kompromiss zwischen Reaktionszeit und Blendung für die Bremslichtfunktion. Sie spielt jedoch auch für Wiederholblinklichtfunktionen zur Fahrtrichtungsanzeige eine Rolle.

Der Kompromiss zwischen Lichtintensität und Reaktionszeit berücksichtigt einen Bereich zwischen einer vom Gesetzgeber vorgeschriebenen minimalen und maximalen Lichtintensität. Des Weiteren wird dieser Bereich weiter durch Anforderungen der Automobilhersteller eingegrenzt, wie beispielsweise einer Forderung nach einer Einhaltung von mindestens 110 % der gesetzlich geforderten Werte. Oft werden die Lichtwerte meist aus Kostengründen auf den unteren, minimalen Lichtintensitätswert ausgelegt. Dabei werden jedoch Einbußen in der Reaktionszeit hingenommen. Für manche Länder gelten darüber hinaus auch minimale Leuchtflächenanforderungen für einzelne Lichtfunktionen, entsprechend der mindestens sichtbaren Mindestflächen von Signallichtfunktionen, beispielsweise aus der FMVSS- und SAE-Anforderung heraus.

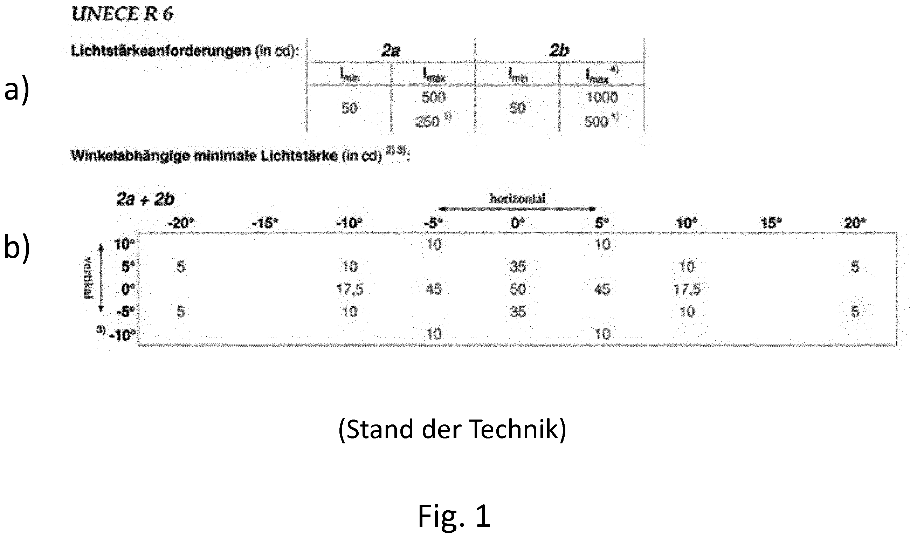

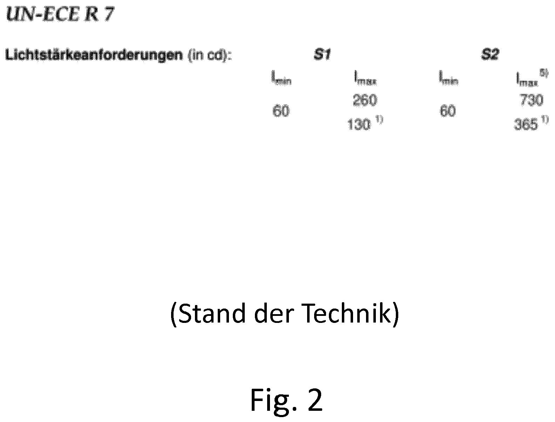

Ein alternativer Ansatz wird mit einer so genannten Mehrpegelleuchte verfolgt, welche beispielsweise zwei Modi für Tag- und Nachtfahrt besitzt. Hier wird der Blendung durch eine zu hohe Lichtintensität bei Nachtfahrt vorgebeugt, tagsüber jedoch durch eine höhere Lichtintensität bei Tagfahrt die Erkennbarkeit gegenüber den gesetzlich vorgeschriebenen Minimallichtstärkewerten verbessert und die Reaktionszeit verringert. Für Mehrpegelleuchten gelten allerdings zusätzlich höhere Maximalwerte (Tag-Anpassung) nach der ECE-Regelung. Auszugsweise ist die in Fig. 1 und Fig. 2 wiedergegeben.

Hierbei zeigt Fig. 1 eine tabellarische Darstellung der gesetzlichen Lichtstärkeanforderungen an eine zur Fahrtrichtungsanzeige (FRA) vorgesehene Wiederholblinklichtfunktion einer als Heckleuchte ausgebildeten Fahrzeugleuchte. Die Tabelle Fig. 1 a) bezieht sich bei dem Minimalwert auf die so genannte HV-Raumrichtung 0° horizontal, 0° vertikal. Im äußeren Bereich sind niedrigere Minimalwerte auch noch zulässig (Fig. 1 b)). Der Maximalwert in Fig. 1 a) bezieht sich auf den gesamten Bereich für alle Werte.

In Fig. 1 a) benennt die mit 2a bezeichnete Tabellenspalte eine Verwirklichung der Wiederholblinklichtfunktion vermittels einer konventionellen, im Unterschied zu einer Mehrpegelleuchte auch als 1-Pegel-Leuchte bezeichenbaren Fahrzeugleuchte. Die Tabellenspalte 2b benennt eine Verwirklichung der Wiederholblinklichtfunktion vermittels einer Mehrpegelleuchte mit variabler Intensität. 1) bedeutet hierin: Für einzelne Leuchte mit "D"-Markierung (independent lamp R48 §2.16.1.(b) UNECE (United Nations Economic Commission for Europe)). 4) bedeutet: Leuchte mit variabler Intensität. Im Falle eines Ausfalls der Kontrolleinheit zur Steuerung der variablen Intensität müssen automatisch die Anforderungen einer 2a-Leuchte eingehalten werden (R6, §5.4 UNECE). Für Systeme die nur eine Tag-/Nacht-Anpassung vornehmen, darf in der nächtlichen Umgebung das Maximum einer 2a-Leuchte nicht überschritten werden, bei anderen Systemen gilt diese Forderung bei guter Sicht und sauberer Lichtscheibe (R6, §6.6.2. & Fußnote 1 UNECE).

Fig. 2 zeigt eine tabellarische Darstellung der gesetzlichen Lichtstärkeanforderungen an eine Bremslichtfunktion (BRL) einer als Heckleuchte ausgebildeten Fahrzeugleuchte. Die Tabelle Fig. 2 bezieht sich bei dem Minimalwert auf die so genannte HV-Raumrichtung 0° horizontal, 0° vertikal. Im äußeren Bereich sind niedrigere Minimalwerte auch noch zulässig, wie bereits zu Fig. 1 b) erläutert. Der Maximalwert in Fig. 2 bezieht sich wiederum auf den gesamten Bereich für alle Werte. 1) bedeutet hierbei: für jede einzelne Leuchte mit "D"-Markierung (independent lamp R48 §2.16.1.(b)). 5) bedeutet: Leuchte mit variabler Intensität. Im Falle eines Ausfalls der Kontrolleinheit zur Steuerung der variablen Intensität, müssen automatisch die Anforderungen einer S1-Leuchte eingehalten werden (R7, §5.8.). Für Systeme die nur eine Tag-/Nacht-Anpassung vornehmen, darf in der nächtlichen Umgebung das Maximum einer S1-Leuchte nicht überschritten werden, bei anderen Systemen gilt diese Forderung bei guter Sicht und sauberer Lichtscheibe (R7, §6.5. & Fußnote 1).

Um die Wahrnehmbarkeit beziehungsweise Wahrnehmungskraft von Lichtfunktionen einer Fahrzeugleuchte für andere Verkehrsteilnehmer zu erhöhen ist bekannt, diese innerhalb der gesetzlich zugelassenen Grenzen aufleben zu lassen.

Ein bekanntes Beispiel sind so genannte dynamische Lichtfunktionen, bei denen die vom Gesetzgeber eingeräumte Zeit, die eine Glühlampe als eine gesetzlich erlaubte Lichtquelle eines zur Erfüllung einer Lichtfunktion vorgesehenen Leuchtmittels benötigt, um ihre volle Leuchtstärke zu erreichen, genutzt wird, um einen visuellen Effekt zu erzielen.

Ein Beispiel eines solchen visuellen Effekts ist das Wischen in Richtung einer beabsichtigten Fahrtrichtungsanzeige bei einer Wiederholblinklichtfunktion eines Fahrtrichtungsanzeigers.

Eine solche durch Wischen verwirklichte dynamische Lichtfunktion wird durch ein Leuchtmittel mit mehreren, nacheinander der Reihe nach angehenden Halbleiterlichtquellen verwirklicht.

Dabei werden innerhalb der ersten 200 ms des Aufleuchtens durch individuell ansteuerbare Halbleiterlichtquellen gebildete einzelne Segmente der der Lichtfunktion zugeordneten Leuchtfläche von der Fahrzeugmitte Richtung außen nacheinander aktiviert, so dass optisch eine Wischbewegung beim Einschalten entsteht.

Der Grund für den Einsatz von Halbleiterlichtquellen, wie etwa LEDs (anorganische Leuchtdioden) und/oder OLEDs (organische Leuchtdioden) und/oder Laserlichtquellen in Verbindung mit dynamischen Lichtfunktionen liegt im Wesentlichen in deren kurzer, typischerweise wenige Millisekunden dauernder Aktivierungszeit vom Beginn einer Strombeaufschlagung bis zur Abstrahlung von Licht. Dabei erfolgt die Lichtabstrahlung quasi vom ersten Augenblick der Strombeaufschlagung an mit voller, der Stromstärke proportionaler Leuchtstärke.

Durch die Verwendung von Halbleiterlichtquellen ist die Einschaltzeit bis zum Erreichen der vollen Lichtintensität im Vergleich zu herkömmlichen thermischen Strahlern, wie beispielsweise Glühbirnen, deutlich verkürzt und somit einhergehend die Reaktionszeit verringert.

Untersuchungen haben gezeigt, dass durch eine mittels Halbleiterlichtquellen verwirklichte, dynamische, wischende Wiederholblinklichtfunktion die Verkehrssicherheit erhöht wird, da durch das Wischen von innen nach außen in Richtung der beabsichtigten Fahrtrichtungsänderung bereits bei Beginn der Wahrnehmung der Lichtfunktion durch andere Verkehrsteilnehmer die durch die Lichtfunktion angezeigte beabsichtigte Fahrtrichtungsänderung von den anderen Verkehrsteilnehmern erkannt und damit deren Reaktionszeit wesentlich verkürzt wird.

Bei der erwähnten, durch Wischen verwirklichten dynamischen Wiederholblinklichtfunktion erreicht die Lichtfunktion trotz des Einsatzes von Leuchtdioden nicht sofort ihre volle Lichtstärke. Die Lichtstärke steigt stattdessen innerhalb der ersten 200 ms des Aufleuchtens mit zunehmender Leuchtfläche linear an. Dies ist der zunehmenden Leuchtfläche geschuldet, die bei gleichbleibendem Lichtstrom je Flächeneinheit zu einer Steigerung der Lichtintensität oder Lichtstärke führt.

Durch die aufgrund des zunächst kleinen leuchtenden Flächenanteils geringere Anfangsintensität einer durch Wischen verwirklichten dynamischen Wiederholblinklichtfunktion besteht jedoch die Gefahr, dass die Lichtfunktion später wahrgenommen wird als eine sofort mit voller Helligkeit aufleuchtende Wiederholblinklichtfunktion zur Fahrtrichtungsanzeige.

Eine der Erfindung zugrunde liegende Aufgabe ist eine Verbesserung der Sicht- und Wahrnehmbarkeit von Lichtfunktionen einer Fahrzeugleuchte, insbesondere einer Heckleuchte für ein Kraftfahrzeug. Insbesondere ist es eine Aufgabe der Erfindung, eine Fahrzeugleuchte und ein Verfahren zu deren Betrieb anzugeben, welche zu einer nachhaltigen Steigerung der Verkehrssicherheit beitragen.

Die Aufgabe wird jeweils durch die Merkmale eines der unabhängigen Ansprüche gelöst. Vorteilhafte Ausführungsformen sind in den abhängigen Ansprüchen, den Zeichnungen sowie in der nachfolgenden Beschreibung, einschließlich der zu den Zeichnungen zugehörigen, wiedergegeben.

Ein erster Gegenstand der Erfindung betrifft demnach eine Fahrzeugleuchte mit mindestens einem wenigstens eine als eine Halbleiterlichtquelle ausgeführte Lichtquelle umfassenden Leuchtmittel zur Erfüllung zumindest einer Lichtfunktion der Fahrzeugleuchte.

Die Fahrzeugleuchte zeichnet sich aus durch kurz als Stromstärkesteuerungsmittel bezeichnete, den Stromdurchfluss durch die wenigstens eine Halbleiterlichtquelle steuernde Mittel, welche beim Einschalten der durch die wenigstens eine Halbleiterlichtquelle ganz oder teilweise verwirklichten Lichtfunktion zunächst den Stromdurchfluss durch die wenigstens eine Halbleiterlichtquelle zunächst auf einen überhöhten Wert regeln und dann nach einer vorgegebenen und/oder vorgebbaren Zeitspanne den Stromdurchfluss von dem überhöhten Wert auf einen Normalwert absenken, beispielsweise mit dem und/oder von welchem Normalwert ausgehend die Halbleiterlichtquelle die Lichtfunktion dann auf die für die Lichtfunktion vorhergesehene Art weiter erfüllt oder deren Erfüllung beiträgt.

Der überhöhte Wert liegt bevorzugt immer noch in dem Bereich, bei dem die Lichtstärke der durch das die Halbleiterlichtquelle umfasste Leuchtmittel erfüllten Lichtfunktion oder zu deren Erfüllung das die Halbleiterlichtquelle umfasste Leuchtmittel beiträgt, gleich oder kleiner als der gesetzlich zulässige Maximalwert ist.

Bei dem Normalwert handelt es sich dabei vorteilhaft um einen einer zum dauerhaften erreichen einer gesetzlich vorgeschriebenen Lichtstärke notwendigen Stromstärke proportionalen Wert.

Gemäß einer vorteilhaften Ausgestaltung der Erfindung ist die wenigstens eine Halbleiterlichtquelle, deren Stromdurchfluss von den Stromstärkesteuerungsmitteln gesteuert wird, vorzugsweise Teil eines zur Verwirklichung einer dynamischen Lichtfunktion vorgesehenen Leuchtmittels.

Um im Einschaltvorgang der Leuchtenfunktion einen geregelten Lichtintensitätsverlauf zu erhalten müssen die Lichtquellen der Leuchtmittel entsprechend angesteuert werden. Insbesondere die weit verbreiteten Leuchtmittel in automobilen Leuchten mit LEDs als Lichtquellen können einfach in ihrer Lichtintensität beeinflusst werden, indem der proportional zur Lichtintensität stehende elektrische Strom durch die LEDs des oder der Leuchtmittel gesteuert wird. Der elektrische Strom für die LEDs wird meist durch sogenannte LED-Treiber bereitgestellt. Somit kann beispielsweise der LED-Treiber angesteuert werden, um einen gewünschten Lichtintensitätsverlauf im Einschaltvorgang zu erhalten. Für die Ansteuerung hierfür besonders geeignet ist ein Mikrocontroller, mit dessen Hilfe der Intensitätsverlauf sogar dynamisch in Höhe und Dauer angepasst werden kann. Insbesondere können stufenförmige Lichtintensitätsverläufe generiert werden.

LEDs werden wegen ihres geringen Spannungsbedarfs zur Anpassung an die vorherrschende Bordnetzspannung in Kraftfahrzeugen oftmals nicht einzeln, sondern häufig zu mehreren in Reihe zu einem so genannten LED-Strang verschaltet verwendet. Zur Anpassung an die Bordnetzspannung ist in dem Strang oder diesem vor- oder nachgeschaltet häufig ein Vorwiederstand angeordnet.

Zur Verwirklichung der Erfindung kann ein Mikrocontroller den Vorwiderstand in einem LED-Strang mittels entsprechender Ansteuerung eines Schalters, besonders geeignet wäre ein Transistor, variieren, wodurch ebenfalls der LED-Strom und somit die Lichtintensität beeinflussbar ist.

Eine weitere Möglichkeit zur Einstellung des Lichtintensitätsverlaufes während des Einschaltvorganges besteht in einer Erweiterung des Schaltungsaufbaus mit diskreten elektronischen Bauteilen wie beispielsweise Widerständen, Induktivitäten und Kondensatoren. Durch geeignete Beschaltung und Auswahl der Bauteilwerte können bevorzugt bei einem LED-Treiber mit stromgesteuerter Stromquelle insbesondere exponentielle Verläufe erzeugt werden.

Ein zweiter Gegenstand der Erfindung betrifft ein Verfahren zum Betrieb einer Fahrzeugleuchte mit mindestens einer vermittels wenigstens einer eine einem Stromdurchfluss durch sie hindurch proportionale Lichtabstrahlung bzw. -abgabe aufweisende Halbleiterlichtquelle ganz oder teilweise verwirklichten Lichtfunktion.

Das Verfahren sieht vor, mit dem Einschalten bzw. Aktivieren zu Beginn einer vermittels wenigstens einer Halbleiterlichtquelle ganz oder teilweise verwirklichten Lichtfunktion die Halbleiterlichtquelle zunächst mit einem überhöhten Wert des Stromdurchflusses anstelle eines zum Erreichen einer beispielsweise gesetzlichen Vorgabe ausreichenden Normalwerts zu beaufschlagen.

Anschließend sieht das Verfahren vor, den Stromdurchfluss von dem überhöhten Wert auf den zum Erreichen der beispielsweise gesetzlichen Vorgabe ausreichenden Normalwert abzusenken.

Im Anschluss hieran kann das Verfahren vorsehen, die Strombeaufschlagung entsprechend einer beispielsweise gesetzlich vorgegebenen Lichtabstrahlung zu steuern. Bei einer Wiederholblinklichtfunktion kann dies vorgegebene Zeitintervalle des Stromdurchflusses und dazwischen liegender Pausen umfassen.

Mit jedem beispielsweise durch Neueinschalten stattfindenden Beginn der Lichtfunktion kann zumindest zunächst der überhöhte Wert vorgesehen sein.

Bei wiederkehrenden Lichtfunktionen, wie etwa einer Wiederholblinklichtfunktion, kann mit jedem zyklisch wiederkehrenden Aufleuchten zumindest zunächst der überhöhte Wert vorgesehen sein.

Einen Spezialfall stellt ein dynamischer Fahrtrichtungsanzeiger, ein sogenannter wischender Blinker, dar. Dieser kann so gestaltet werden, dass die Einschaltintensität der einzelnen nacheinander aufleuchtenden Segmente unterschiedlich gewählt wird. So kann die Helligkeit des ersten Segments so stark erhöht werden, dass die gesamte Lichtstärke beim Aufleuchten höher als im voll eingeschalteten Zustand ist. Es besteht jedoch auch die Möglichkeit, durch eine höhere Einschaltintensität einzelner Segmente lediglich die fehlende Lichtstärke noch nicht aktivierter Segmente zu kompensieren. Eine solche Leuchte kombiniert die schnellere Erkennbarkeit der Abbiegerichtung durch das Wischen des Fahrtrichtungsanzeigers mit sofortiger voller Helligkeit beim Aufleuchten.

Vorteilhaft kann das Verfahren vorsehen, dass der überhöhte Wert mit zunehmender Anzahl von aktivierten Halbleiterlichtquellen beispielsweise eines zur Verwirklichung einer dynamischen Lichtfunktion vorgesehenen Leuchtmittels und damit einhergehend zunehmender Leuchtfläche abnimmt, beispielsweise bis er mit der Strombeaufschlagung der letzten Halbleiterlichtquelle des zur Verwirklichung einer dynamischen Lichtfunktion vorgesehenen Leuchtmittels den Normalwert einnimmt.

Beispielsweise kann der überhöhte Wert linear mit zunehmender Anzahl aktivierter Halbleiterlichtquellen abnehmen.

Dies ist der zunehmenden Leuchtfläche geschuldet, die bei gleichbleibendem Lichtstrom je Flächeneinheit bereits zu einer Steigerung der Lichtintensität oder Lichtstärke führt.

Durch den mit zunehmender Anzahl aktivierter Halbleiterlichtquellen abnehmenden überhöhten Wert wird ein Glitzereffekt erhalten, der im zeitlichen Verlauf des Aufleuchtens der dynamischen Lichtfunktion abnimmt, quasi «nachhallt».

Es kann eine Tag- und Nachtfunktion verwirklicht werden, mit stärkerer Lichtintensität bei Tag.

Innerhalb der ersten Sekunde kann die Lichtintensität durch so genanntes Pulsen mehrfach verändert werden.

Die Umsetzung der erfindungsgemäßen hohen Einschaltintensität muss nicht zwingend für alle Einschaltvorgänge eines Lichtsignals erfolgen. So ist es beispielsweise vorstellbar die erfindungsgemäße hohe Einschaltintensität nur dann einzusetzen, wenn die Lichtfunktion im helligkeitsreduzierten Nachtmodus aktiviert wird. Beim Fahrtrichtungsanzeiger kann es als sinnvoll angesehen werden nur beim ersten Aufleuchten des Blinklichts die Einschaltintensität zu erhöhen, nicht jedoch beim Widerholen des Blinkens.

Das sogenannte adaptive Bremslicht, auch aktives Bremslicht oder dynamisches Bremslicht genannt, kann in Kraft treten, wenn die Verzögerung des Fahrzeuges im Bremsvorgang ≥ 6 m/s² und die Geschwindigkeit > 50 km/h beträgt. Dabei blinkt die Bremslichtfunktion bei dieser Notbremsung mehrmals pro Sekunde auf um den nachfolgenden Verkehr besonders zu warnen. Entsprechend wird bei lediglich geringer Verzögerung im Bremsvorgang ≤ 2,5 m/s² die statische Funktion der Bremsleuchte aktiviert. Insbesondere für eine mittlere Verzögerung im Bremsvorgang mit einem Wert von > 2,5 m/s² und < 6 m/s² kann die höhere Einschaltintensität kombiniert mit einem bestimmte Intensitätsverlauf für die Leuchtenfunktionen zum Einsatz kommen, bevorzugt für das Bremslicht oder eine durch eine kurz auch als Blinker bezeichnete Wiederholblinklichtfunktion verwirklichte FRA bzw. eines Warnblinkers. Denkbar ist dabei unter anderem auch ein Springen zwischen zwei Lichtintensitätspegels um ein Aufblitzen der Leuchtenfunktion zu generieren. Bevorzugt kann zur Signalisierung eines Bremsvorganges mit mittlerer Verzögerung der Low-Pegel einen Wert von beispielsweise 50 % des High-Pegels annehmen, wodurch die Leuchtenfunktion während der Dauer des Low-Pegels nicht vollständig abgeschaltet ist. Somit ist eine Differenzierung zwischen leichtem, mittlerem und starkem Bremsvorgang möglich.

Die Dauer, Frequenz, Verlauf und der High- bzw. Low-Pegel des Lichtintensitätswertes während des Einschaltvorganges kann abhängig der Geschwindigkeit und der Verzögerung dynamisch angesteuert werden um dem nachfolgenden Fahrzeug möglichst genau die Verzögerung des Bremsvorganges des vorausfahrenden Fahrzeuges zu signalisieren.

Die Erfindung basiert auf der Erkenntnis, dass für eine geringe Reaktionszeit nur die Lichtintensität innerhalb der ersten Sekunde nach Aktivieren einer Lichtfunktion relevant sein kann. Eine Reaktion auf eine Lichtsignalfunktion umfasst jedoch wesentlich mehr, als das bloße erregen der visuellen Aufmerksamkeit und das visuelle Wahrnehmen des Aufleuchtens eines Lichtsignals. Das Lichtsignal muss erkannt werden, bewertet werden und eine passende Handlung ausgeführt werden. Es ist daher davon auszugehen, dass lediglich die Lichtstärke innerhalb der ersten wenigen Zehntelsekunden entscheidend für die Reaktionszeit ist.

Zusammengefasst schlägt die Erfindung zur Steigerung der Verkehrssicherheit durch Verbesserung der Wahrnehmbarkeit von Lichtfunktionen eine dynamische Veränderung der Lichtintensität von Lichtfunktionen, insbesondere einer Wiederholblinklichtfunktion und/oder einer Bremslichtfunktion, innerhalb der ersten Sekunde unmittelbar beim Einschalten der Lichtfunktion vor.

Hierdurch wird nachweislich die Aufmerksamkeit eines Betrachters angezogen. Durch Absenken der Intensität innerhalb der ersten Sekunde nach dem Einschalten auf das gängige Niveau wird eine Blendung vermieden.

Es ist ersichtlich, dass die Erfindung durch eine Lichtfunktion einer Fahrzeugleuchte, insbesondere einer Fahrzeugleuchte für ein Kraftfahrzeug, mit hoher Einschaltintensität verwirklicht sein kann.

Die gesetzlichen Vorgaben weisen für das Einschaltverhalten einer Lichtsignalfunktion eine Grauzone auf, innerhalb derer sich ein Gestaltungsspielraum ergibt, der für die Hervorhebung einer Lichtfunktion und damit deren Wahrnehmungskraft genutzt werden kann. Da eine Glühlampe beim Einschalten technisch bedingt etwa 200 ms benötigt, um ihre volle Helligkeit zu erreichen, werden Änderungen der Lichtintensität in diesem Zeitraum eher akzeptiert als im Dauerbetrieb. Besonders hohe Chancen für zulässig befunden zu werden, hat eine erhöhte Einschaltintensität einer Signalfunktion, wenn die gesetzlich zulässige Maximallichtstärke zu keinem Zeitpunkt überschritten wird und der Lichtintensitätsabfall innerhalb der ersten 200 ms nach dem Einschalten so erfolgt, dass die Helligkeitsänderung kaum bewusst wahrnehmbar ist. Dennoch ist die Erfindung nicht auf die momentan geltenden gesetzlichen Regelungen beschränkt.

Die Fahrzeugleuchte kann einzelne oder eine Kombination der zuvor und/oder nachfolgend in Verbindung mit dem Verfahren beschriebene Merkmale aufweisen, ebenso wie das Verfahren einzelne oder eine Kombination mehrerer zuvor und/oder nachfolgend in Verbindung mit der Fahrzeugleuchte beschriebene Merkmale aufweisen und/oder verwirklichen kann.

Die Fahrzeugleuchte und/oder das Verfahren können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Vorteile gegenüber dem Stand der Technik sind, dass die Erfindung der hohen Einschaltintensität folgende Sicherheitsmerkmale für den Straßenverkehr mit sich bringt:
- Kürzere Reaktionszeit bei der Erkennung einer Lichtfunktion durch am Straßenverkehr Beteiligte;
- Vermeidung oder Verringerung von Blendung;
- Kombination mit Mehrpegelleuchten möglich;
- gesetzliche Vorgaben weiterhin erfüllt;
- keine oder geringe Beeinflussung der thermischen Aspekte in einer Leuchte.

Ein Vorteil von LED-Leuchtmitteln im Vergleich zu thermischen Strahlern, wie beispielsweise Glühlampen, ist die kürzere Einschaltzeit. Durch eine zusätzlich kurzzeitig höhere Lichtintensität im Einschaltvorgang kann dieser Vorteil bekräftigt werden.

Insbesondere die Funktion des wischenden Blinkers besitzt zu Beginn des Wischens nur wenige aktive LEDs und somit eine geringe Lichtintensität. Mit einer höheren Einschaltintensität entsteht beim Einschalten der Funktion eine höhere Lichtintensität und die Reaktionszeit kann verringert werden.

Vor allem bei der Funktion der Bremsleuchte ist eine Verringerung der Reaktionszeit für deren Erkennung besonders vorteilhaft, um frühzeitiger auf den Bremsvorgang des vorangehenden Fahrzeuges reagieren zu können und den Bremsweg zu verkürzen.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: eine tabellarische Wiedergabe der gesetzlichen Lichtstärkeanforderungen an eine auch als Fahrtrichtungsanzeige (FRA) bezeichnete Wiederholblinklichtfunktion einer als Heckleuchte ausgebildeten Fahrzeugleuchte mit den Maximalwerten für die Lichtstärke im gesamten Bereich sowie mit den Minimalwerten für die direkt nach hinten gerichtete Lichtstärke in so genannter Messrichtung HV (HV-Raumrichtung; 0° horizontal, 0° vertikal) in Fig. 1 a) und mit den Minimalwerten für den gesamten Bereich in Fig. 1 b).
- Fig. 2: eine tabellarische Wiedergabe der gesetzlichen Lichtstärkeanforderungen an eine Bremslichtfunktion (BRL) einer als Heckleuchte ausgebildeten Fahrzeugleuchte mit den Maximalwerten für die Lichtstärke im gesamten Bereich sowie mit den Minimalwerten für die direkt nach hinten gerichtete Lichtstärke in so genannter Messrichtung HV (HV-Raumrichtung; 0° horizontal, 0° vertikal).
- Fig. 3: ein Ablaufdiagramm eines Verfahrens zum Betrieb einer Fahrzeugleuchte mit mindestens einer vermittels wenigstens einer eine einem Stromdurchfluss durch sie hindurch proportionale Lichtabstrahlung aufweisende Halbleiterlichtquelle ganz oder teilweise verwirklichten Lichtfunktion.
- Fig. 4: eine schematische Darstellung einer Lichtintensitätskurve (I) mit verschiedenen zeitlichen Verläufen.
- Fig. 5: eine schematische Darstellung einer Netzwerkerweiterung im LED-Strang zur Variation des LED-Strang-Vorwiderstandes.
- Fig. 6: eine schematische Darstellung einer Netzwerkerweiterung mit Schalter und Widerstand.
- Fig. 7: eine schematische Darstellung einer Netzwerkerweiterung im Referenzstrompfad.
- Fig. 8: eine schematische Darstellung einer Netzwerkerweiterung mit einem RC-Glied.
- Fig. 9: eine schematische Darstellung eines Einschaltvorgangs mit stufenförmigem Ein-/Aus-Verlauf.
- Fig. 10: eine schematische Darstellung eines Einschaltvorgangs mit stufenförmigem Î-Iₛₒₗₗ-Veriauf.
- Fig. 11: eine schematische Darstellung eines an einen Glühlampen-Einschaltverlauf angepassten stufenförmigen Einschaltvorgangs.
- Fig. 12: eine schematische Darstellung eines Einschaltvorgangs bei einer Lichtfunktion mit variabler Intensität. Bei hoher Lichtstärke (Tagpegel) wird die Einschaltintensität nicht erhöht, bei geringer Lichtstärke (Nachtpegel) wird die Lichtfunktion mit hoher Intensität aktiviert.
- Fig. 13: eine schematische Darstellung eines Einschaltvorgangs bei einem dynamischen Fahrtrichtungsanzeiger, bei dem drei Segmente nacheinander eingeschaltet werden. Gestrichelt ist die Lichtintensität beim herkömmlichen Einschaltvorgang für die drei Segmente und für die gesamte Lichtfunktion dargestellt. Die durchgezogene Kurve zeigt den Lichtintensitätsverlauf für eine Lichtfunktion mit erhöhter Einschaltintensität, die hier so gewählt ist, dass sie insgesamt einen konstanten Helligkeitsverlauf erzeugt.

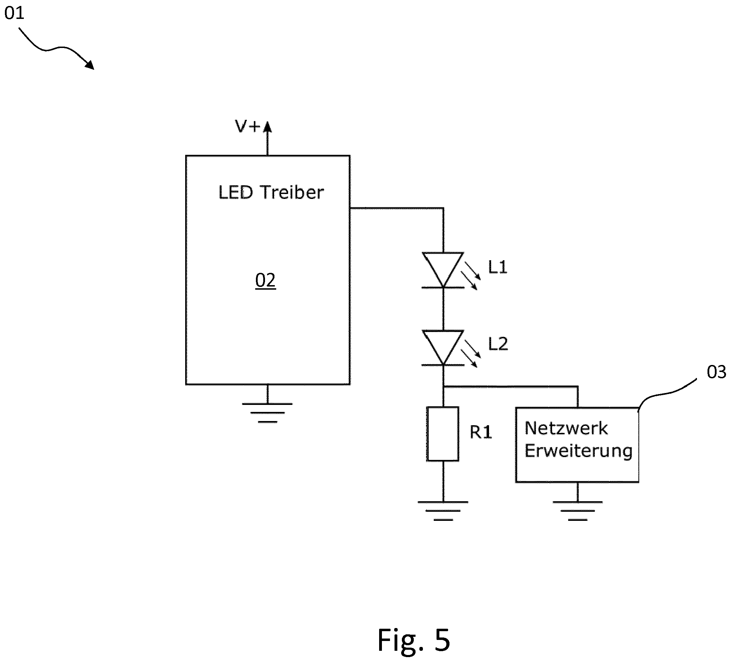

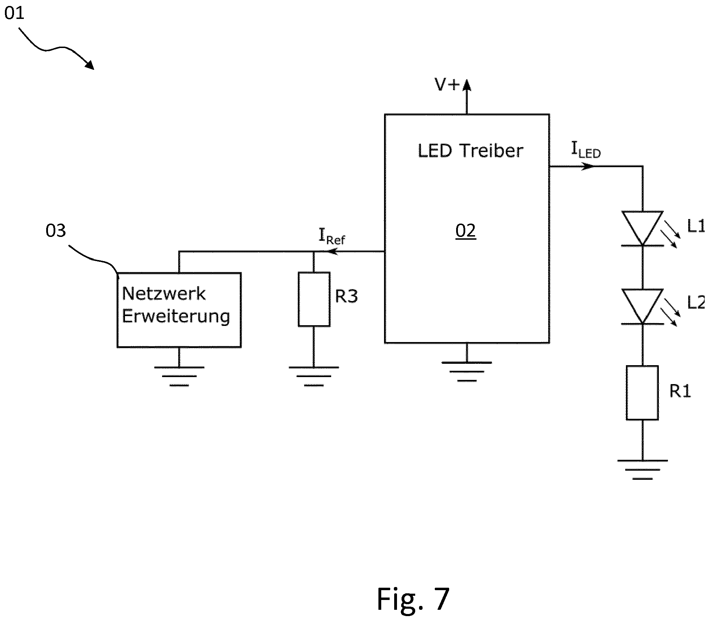

Es werden eine Fahrzeugleuchte mit mindestens einer durch ein Leuchtmittel mit mindestens einer Halbleiterlichtquelle L1, L2 (Fig. 5, Fig. 7) ganz oder teilweise verwirklichten Lichtfunktion und ein Verfahren zu deren Betrieb vorgeschlagen, welche während des Einschaltvorganges einer wegen ihrer Erfüllung durch die Fahrzeugleuchte kurz auch als Leuchtenfunktion bezeichneten Lichtfunktion kurzzeitig, innerhalb weniger Sekunden, bevorzugt innerhalb weniger hundert Millisekunden, eine höhere Lichtintensität erzeugen, bevor die Lichtintensität auf das Nennlevel abfällt. Hierdurch wird zum einen Blendung vermieden und zum anderen durch eine höhere Lichtintensität zu Beginn des Einschaltvorgangs die Reaktionszeit verringert. Des Weiteren können thermische Grenzen nach wie vor eingehalten werden, da die einhergehende höhere Verlustleistung nur für kurze Zeit auftritt.

Die überhöhte Lichtintensität liegt mit ihrer Lichtstärke bevorzugt in dem Bereich, bei dem die Lichtstärke der durch das die Halbleiterlichtquelle umfasste Leuchtmittel erfüllten Lichtfunktion oder zu deren Erfüllung das die Halbleiterlichtquelle umfasste Leuchtmittel beiträgt, gleich oder kleiner als der gesetzlich zulässige Maximalwert ist.

Die Einschränkung, wonach die Lichtfunktion ganz oder teilweise durch ein Leuchtmittel mit mindestens einer Halbleiterlichtquelle L1, L2 verwirklicht sein kann erfasst den Umstand, dass eine Lichtfunktion durch beispielsweise verschiedenartige Lichtquellen eines oder mehrerer Leuchtmittel verwirklicht sein kann, so dass jede Lichtquelle des mindestens einen die Lichtfunktion verwirklichenden Leuchtmittels der Erfüllung der Lichtfunktion beiträgt. Sind verschiedenartige Lichtquellen an der Verwirklichung der Lichtfunktion beteiligt, werden vorzugsweise nur die der Erfüllung beitragenden Halbleiterlichtquellen erfindungsgemäß mit einer erhöhten Einschaltintensität betrieben.

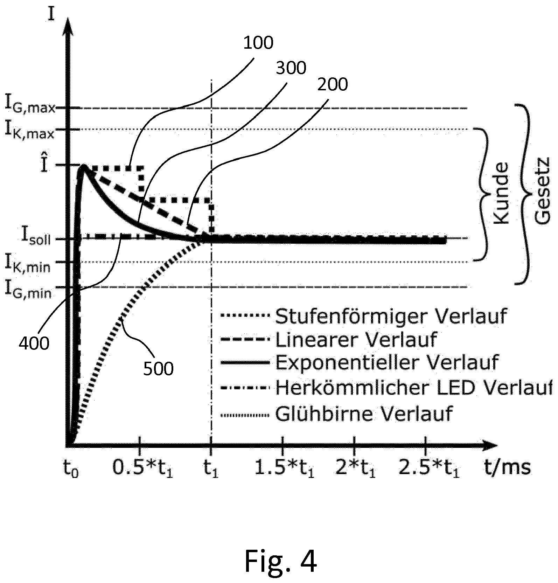

Der kurzeitig höhere Lichtintensitätspeak kann so ausgelegt werden, dass dieser weiterhin innerhalb des gesetzlichen und von den Fahrzeugherstellern geforderten Rahmenbereichs liegt (Fig. 4, Fig. 9, Fig. 10, Fig. 11, Fig. 12, Fig. 13).

Eine kurzzeitig höhere Lichtintensität beim Einschalten der Leuchtenfunktion führt zu einer geringeren Reaktionszeit des Menschen für deren Erkennung und steigert somit die Sicherheit im Straßenverkehr. Blendung wird ebenfalls vermieden, da die höhere Lichtintensität nur für eine kurze Zeit, wenige Sekunden, bevorzugt wenige hundert Millisekunden, angelegt wird. Die höhere Lichtintensität bleibt innerhalb des gesetzlich geforderten Bereiches. Thermische Aspekte bleiben aufgrund lediglich kurzer höherer Leistungsabgabe der Leuchtmittel weitestgehend unberührt.

Als eine Grundlage dient die Veröffentlichung der Studie "Evaluation of rear lights in driving situations" von C. Ries, D. Polin, C. Schiller, T. Q. Khanh auf der ISAL 2017. Hierbei wurde herausgefunden, dass eine höhere Lichtintensität einer Leuchtenfunktion in einer kürzeren Reaktionszeit resultiert. Die Ergebnisse zeigen, dass die Reaktionszeit im Bereich 40 cd bis 200 cd stetig fällt. Der optimale Bereich wird auf 200 cd angesetzt, da höhere Werte zunehmend zu Blendung führen und keine weitere positive Auswirkung auf die Reaktionszeit hat. Aus der Studie ergibt sich bei 200 cd eine Reaktionszeit von ca. 0,77 s, im Vergleich hierzu beträgt der minimale gesetzliche Lichtwert für beispielsweise die Bremslichtfunktion 60 cd (ECE), welches in einer Reaktionszeit von ca. 0,84 s resultiert.

Die Differenz der Reaktionszeit zwischen minimaler Lichtintensität und optimaler Lichtintensität beträgt (0,84 s - 0,77 s) = 0,07 s = 70 ms bzw. eine prozentuale Verringerung von ungefähr [1 - (0,77 s / 0.84 s)] = 8,33 %. Diese Verkürzung der Reaktionszeit zur Erkennung der Leuchtenfunktion führt zu einer Steigerung der Sicherheit im Straßenverkehr, etwa durch beispielsweise Reduzierung des Bremsweges infolge einer schnelleren und sichereren Erkennung des Lichtsignals.

Im Zusammenhang mit Signalleuchten an Fahrzeugen tritt Blendung vor allem als "discomfort glare" auf, d. h. ein Licht wird als unangenehm hell empfunden, während die optische Wahrnehmung insgesamt davon jedoch nicht oder kaum beeinträchtigt wird. Es ist davon auszugehen, dass ein heller Lichtreiz als weniger unangenehm empfunden wird, wenn er nur sehr kurz auftritt.

Folglich lassen sich gleichzeitig die Blendung vermeiden und die Reaktionszeit auf ein Signallicht minimieren, wenn eine Lichtfunktion mit hoher Lichtintensität (beispielsweise 200 cd) eingeschaltet wird, die Lichtstärke jedoch innerhalb einer Sekunde, bevorzugt innerhalb weniger hundert Millisekunden, auf einen geringeren Wert (beispielsweise 70 cd) abgesenkt wird. Dies kann bei einer Wiederholblinklichtfunktion zur Fahrtrichtungsanzeige bei jedem nach einer Unterbrechung erfolgenden Aufleuchten mit beispielsweise gleichbleibender hoher Einschaltintensität geschehen. Auch eine Absenkung der Einschaltintensität im Laufe der Wiederholungen des Aufleuchtens ist möglich. Eine Absenkung der Einschaltintensität ist darüber hinaus auch bei dynamischen Lichtfunktionen möglich, die durch eine zunehmende Anzahl von zeitlich versetzt nacheinander aufleuchtende Halbleiterlichtquellen verwirklicht sind, wobei die erhöhte Einschaltintensität bei jeder neu aufleuchtenden Halbleiterlichtquelle angewandt wird und mit zunehmender Anzahl von leuchtenden Halbleiterlichtquellen abgesenkt wird.

Zudem nehmen die Beleuchtungsstärke und damit auch die Blendung stark mit dem Abstand zur Lichtquelle ab. So ist eine Blendung des nachfolgenden Verkehrs beispielsweise bei stehendem Fahrzeug an einer Ampel wesentlich wahrscheinlicher als bei im fließenden Verkehr auftretenden größeren Abständen zwischen aufeinander folgenden Fahrzeugen. In der Regel wird insbesondere die Bremslichtfunktion in fließendem Verkehr aktiviert, wodurch die hohe Einschaltintensität bei großen Abständen von beispielsweise 25 m und mehr zwischen den aufeinander folgenden Fahrzeugen auftritt und folglich mit geringer Blendungsneigung als im Anschluss, wenn die Bremsleuchten bereits mit geringerer Lichtstärke leuchten und der Abstand bereits abgenommen hat. Wird bis zum Stillstand abgebremst leuchten die Bremsleuchten - bereits mit geringerer Lichtstärke.

Wichtig ist an dieser Stelle hervorzuheben, dass im vorliegenden Dokument die Begriffe Lichtintensität und Lichtstärke synonym gebraucht werden. Darüber hinaus sind sie proportional zum ausgesandten Lichtstrom der durch Halbleiterlichtquellen verwirklichten Lichtquellen der die betreffenden Lichtfunktionen erfüllenden oder zu deren Erfüllung beitragenden Leuchtmittel in der Leuchte, weil in der vorliegenden Beschreibung von einem festen Aufbau der Optik ausgegangen wird.

Sofern beispielhaft in der Beschreibung oder in den Zeichnungen Lichtstärkewerte in candela (cd) angegeben werden, ist in Bezug auf Heckleuchten stets die direkt nach hinten gerichtete Lichtstärke gemeint, entsprechend der sogenannten Messrichtung HV (0° horizontal, 0° vertikal).

Die Einschaltintensität bezeichnet die Lichtstärke direkt nach dem Einschalten der Lichtfunktion. Unter einer hohen Einschaltintensität wird eine Lichtstärke der Lichtfunktion verstanden, die kurzzeitig höher ist als im späteren Dauerbetrieb der Lichtfunktion.

Unter Dauerbetrieb ist hierbei auch der Betrieb einer selbständig intermittierenden Lichtfunktion, wie etwa einer Wiederholblinklichtfunktion, oder einer bedarfsweise intermittierenden Lichtfunktion, wie etwa einer Bremslichtfunktion, im Anschluss an die höhere Einschaltintensität nach dem Einschalten bis zu deren selbsttätigem oder bedarfsweisem Erlöschen zu verstehen, wie dies etwa bei einer Wiederholblinklichtfunktion durch Unterbrechungen so lange wiederkehrend der Fall ist, bis die Wiederholblinklichtfunktion abgeschaltet wird.

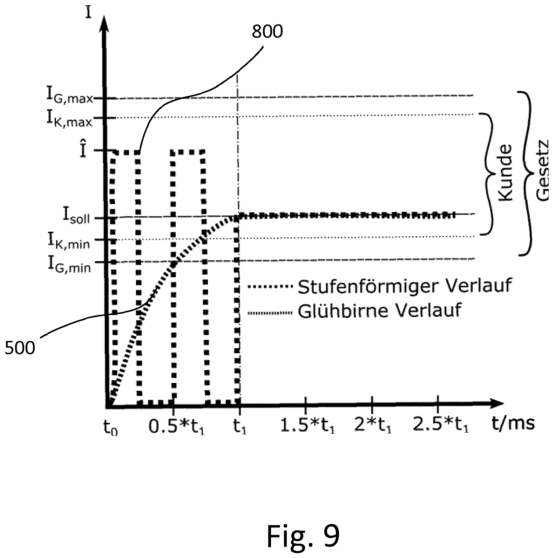

Die erhöhte Einschaltintensität des Signallichts kann kontinuierlich so abgesenkt werden, dass die Abnahme der Lichtstärke für einen menschlichen Beobachter visuell kaum wahrzunehmen ist. Die Lichtintensität kann jedoch auch so schnell abgeschaltet werden, dass dieses das Absenken der anfänglichen Lichtintensität durch einen auffälligen Helligkeitssprung erneut die visuelle Aufmerksamkeit erregt. Auch dies kann zu einer beschleunigten Wahrnehmung des Lichtsignals beitragen. Verstärken lässt sich dieser Effekt weiter, indem mehrere schnell aufeinanderfolgende Helligkeitssprünge zwischen hoher und geringerer Lichtintensität ausgeführt werden (Fig. 9, Fig. 10, Fig. 11).

Dies vorausgeschickt kann die Erfindung verwirklicht sein durch eine Fahrzeugleuchte mit mindestens einem wenigstens eine als eine Halbleiterlichtquelle L1, L2 ausgeführte Lichtquelle umfassenden Leuchtmittel zur Erfüllung zumindest einer Lichtfunktion der Fahrzeugleuchte. Die Fahrzeugleuchte umfasst zur Verwirklichung der voranstehenden Eigenheiten kurz als Stromstärkesteuerungsmittel 01 (Fig. 5, Fig. 7) bezeichnete, die Stromstärke beziehungsweise den Stromdurchfluss durch die wenigstens eine Halbleiterlichtquelle L1, L2 steuernde Mittel. Die Stromstärkesteuerungsmittel 01 regeln den Stromdurchfluss durch die wenigstens eine Halbleiterlichtquelle L1, L2 zunächst auf einen überhöhten Wert beim Einschalten der durch die wenigstens eine Halbleiterlichtquelle L1, L2 ganz oder teilweise verwirklichten Lichtfunktion. Nach einer vorgegebenen und/oder vorgebbaren Zeitspanne senken die Stromstärkesteuerungsmittel 01 dann den Stromdurchfluss von dem überhöhten Wert auf einen Normalwert ab, beispielsweise mit dem und/oder von welchem Normalwert ausgehend die eine oder mehreren Halbleiterlichtquellen L1, L2 die Lichtfunktion dann auf die für die Lichtfunktion vorhergesehene Art weiter erfüllen oder deren Erfüllung beitragen.

Der Normalwert bezeichnet hierbei eine Stromstärke, welche wenn die eine oder mehreren zumindest eine Halbleiterlichtquellen L1, L2 umfassenden Lichtquellen eines zur Verwirklichung einer Lichtfunktion vorgesehenen Leuchtmittels mit dieser Stromstärke beaufschlagt werden, diese Lichtfunktion mit einer vorgegebenen Lichtstärke und Lichtverteilung - kurz Helligkeit - erfüllen.

Bei dem Normalwert handelt es sich dabei vorteilhaft um einen einer zum dauerhaften erreichen einer gesetzlich vorgeschriebenen Lichtstärke notwendigen Stromstärke proportionalen Wert.

Der überhöhte Wert bezeichnet im Gegensatz hierzu eine Stromstärke, die höher ist, als die Stromstärke bei Normalwert. Der überhöhte Wert liegt dabei zu Beginn der Aktivierung der jeweiligen Lichtfunktion an dem oder den als eine oder mehrere Halbleiterlichtquellen L1, L2 ausgeführten Lichtquellen des zur Verwirklichung der jeweiligen Lichtfunktion vorgesehenen Leuchtmittels an. Bei Anliegen des überhöhten Werts strahlen die Halbleiterlichtquellen L1, L2 heller, als bei Anliegen des Normalwerts. Durch zumindest kurzzeitiges Anlegen des überhöhten Werts zu Beginn des Einschaltens der entsprechenden Lichtfunktion, scheint diese kurzzeitig aufzublitzen, wodurch die Wahrnehmungskraft der jeweiligen Lichtfunktion unmittelbar beim Einsetzen derselben erhöht wird.

Mit anderen Worten lässt der überhöhte Wert die Lichtfunktion kurz aufblitzen.

Die Fahrzeugleuchte umfasst vorteilhaft eine Lichtscheibe und einen Leuchtmittelträger, auf dem zumindest die eine oder mehreren mindestens eine Halbleiterlichtquelle L1, L2 umfassenden Lichtquellen des oder der zur Erfüllung der Lichtfunktionen der Fahrzeugleuchte vorgesehenen Leuchtmittel angeordnet sind.

Darüber hinaus kann sie einen im Wesentlichen von einem Leuchtengehäuse und der Lichtscheibe umschlossenen Leuchteninnenraum umfassen.

Die wenigstens eine Halbleiterlichtquelle L1, L2, deren Stromdurchfluss von den Stromstärkesteuerungsmitteln 01 gesteuert wird, kann vorzugsweise Teil eines zur Verwirklichung einer dynamischen Lichtfunktion der Fahrzeugleuchte vorgesehenen Leuchtmittels sein.

Um während des Einschaltvorgangs einer Lichtfunktion einen geregelten Lichtintensitätsverlauf zu erhalten müssen die Lichtquellen des oder der die Lichtfunktion verwirklichenden Leuchtmittel entsprechend angesteuert werden. Insbesondere die weit verbreiteten Leuchtmittel in automobilen Leuchten mit LEDs als Halbleiterlichtquellen L1, L2 können in ihrer Lichtintensität beeinflusst werden, indem der proportional zur Lichtintensität stehende elektrische Strom durch die LEDs des oder der Leuchtmittel gesteuert wird. Der elektrische Strom für die LEDs wird meist durch sogenannte LED-Treiber 02 bereitgestellt. Somit kann beispielsweise der LED-Treiber 02 angesteuert werden, um einen gewünschten Lichtintensitätsverlauf im Einschaltvorgang zu erhalten (Fig. 5, Fig. 7).

Fig. 4 zeigt drei mögliche Lichtintensitätsverläufe während des Einschaltvorganges einer Leuchtenfunktion. Der Einschaltvorgang beläuft sich auf das Zeitintervall von t0 bis t1. Die Lichtintensität verläuft stets innerhalb des gesetzlichen und kundenspezifischen Bereiches, wobei nach dem Einschaltvorgang der Solllichtintensitätswert Isoll erreicht wird.

Die Dauer des Einschaltvorganges bis zum Zeitpunkt t1 kann wenige Sekunden, bevorzugt einige hundert Millisekunden betragen. Für einen durch eine Wiederholblinklichtfunktion verwirklichten Fahrtrichtungsanzeiger (FRA) bietet sich insbesondere eine Einschaltdauer von t1 ≤ 200 ms an, weil für diesen Zeitraum bereits besondere gesetzliche Regelungen bezüglich eines durch einen so genannten wischenden Blinker verwirklichten dynamischen Einschaltvorgangs existieren.

Der Lichtintensitätsverlauf kann während des Einschaltvorganges beispielsweise einen in Fig. 4 durch eine grob punktierte Kurve 100 angedeuteten, stufenförmigen Lichtintensitätsverlauf aufweisen, einen in Fig. 4 durch eine gestrichelte Kurve 200 angedeuteten, linearen Lichtintensitätsverlauf aufweisen, oder einen in Fig. 4 durch eine durchgezogene Kurve 300 angedeuteten, exponentiellen Lichtintensitätsverlauf aufweisen.

Diese Verläufe können mittels Mikrocontrolleransteuerung oder diskretem Schaltungsaufbau erreicht werden.

Zum Vergleich sind in Fig. 4 ein herkömmlicher LED-Einschalt-Lichtintensitätsverlauf durch eine strichpunktierte Kurve 400 und ein herkömmlicher Lichtintensitätsverlauf beim Einschalten einer Glühbirne durch eine fein punktierte Kurve 500 dargestellt.

Die den Stromdurchfluss durch die wenigstens eine Halbleiterlichtquelle L1, L2 steuernden Mittel können einen Mikrocontroller umfassen. Mit Hilfe des Mikrocontrollers kann die Stromstärke und damit der Intensitätsverlauf der Lichtabstrahlung der einen oder mehreren Halbleiterlichtquellen L1, L2 dynamisch in Höhe und Dauer angepasst werden.

Alternativ oder zusätzlich zu einem Mikrocontroller kann ein FPGA (Field Programmable Gate Array) oder ASIC (Application-Specific Integrated Circuit) eingesetzt werden, um - beispielsweise durch Ansteuerung eines oder mehrerer Schalter S1 und/oder Kondensatoren C1 und/oder Induktivitäten und/oder zusätzlicher Elektronikbauteile - die Stromstärke und damit der Intensitätsverlauf der Lichtabstrahlung der einen oder mehreren Halbleiterlichtquellen L1, L2 dynamisch in Höhe und Dauer angepasst werden.

Für die Ansteuerung eines LED-Treibers 02 besonders geeignet ist ein Mikrocontroller. Mit Hilfe des Mikrocontrollers kann der Intensitätsverlauf sogar dynamisch in Höhe und Dauer angepasst werden. Insbesondere können stufenförmige Lichtintensitätsverläufe generiert werden.

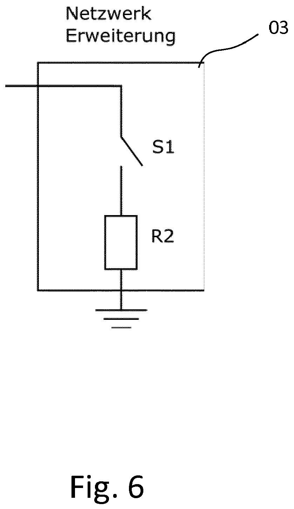

Der Mikrocontroller kann beispielsweise einen oder mehrere Schalter S1 steuern, über dessen oder deren Schalterstellungen Einfluss auf den Stromdurchfluss durch wenigstens eine Halbleiterlichtquelle L1, L2 genommen werden kann (Fig. 6).

LEDs als Halbleiterlichtquellen L1, L2 werden wegen ihres geringen Spannungsbedarfs zur Anpassung an die vorherrschende Bordnetzspannung in Kraftfahrzeugen oftmals nicht einzeln, sondern häufig zu mehreren in Reihe zu einem so genannten LED-Strang verschaltet verwendet. Zur Anpassung an die Bordnetzspannung ist in dem Strang oder diesem vor- oder nachgeschaltet häufig ein Vorwiederstand R1 angeordnet (Fig. 5). Ein Vorwiderstand R1 kann auch bei nicht in Reihe verschalteten LEDs zum Einsatz kommen, ebenso wie bei OLEDs.

Zur Verwirklichung der Erfindung kann ein Mikrocontroller den Vorwiderstand in einem LED-Strang mittels entsprechender Ansteuerung eines Schalters S1, besonders geeignet wäre ein Transistor, variieren, wodurch ebenfalls der LED-Strom und somit die Lichtintensität beeinflussbar ist (Fig. 5 und Fig. 6).

Fig. 5 zeigt ein Ausführungsbeispiel, bei dem die Stromstärkesteuerungsmittel 01 eine Netzwerkerweiterung 03 im LED-Strang zur Variation des Widerstandswerts eines LED-Strang-Vorwiderstands R1 umfassen.

Durch die Netzwerkerweiterung 03 kann der Vorwiderstandswert des LED-Strangs variiert werden.

Durch Verringerung des Vorwiderstandswerts steigt der Strom durch die als LEDs ausgeführten Halbleiterlichtquellen L1 sowie L2 und somit die Lichtintensität.

Ein Ausführungsbeispiel für die Netzwerkerweiterung 03 ist in Fig. 6 dargestellt. Hierbei kann ein zusätzlicher Widerstand R2 mit einem Schalter S1 während des Einschaltvorganges zugeschaltet werden. Der Schalter S1 kann bevorzugt aus einem Transistor bestehen, einen solchen umfassen oder von einem solchen umfasst sein, welcher durch einen Mikrocontroller angesteuert wird. Mit diesem Schaltungsaufbau kann ein stufenförmiger Intensitätsverlauf, wie in Fig. 4 durch die Kurve 100 dargestellt, erreicht werden.

In der in Fig. 6 gezeigten Stellung des Schalters S1 bildet der Wert des Vorwiderstands R1 den Vorwiderstandswert des LED-Strangs in Fig. 5.

Bei offenem Schalter S1 ist nur der Vorwiderstand R1 in Reihe zu den Halbleiterlichtquellen L1, L2 des LED-Strangs geschaltet. Wird der Schalter S1 in Fig. 6 geschlossen, so wird der zusätzliche Widerstand R2 parallel zum Vorwiderstand R1 geschaltet. Bei geschlossenem Schalter S1 sind die beiden parallel geschalteten Vorwiderstände R1, R2 in Reihe zu den Halbleiterlichtquellen L1, L2 des LED-Strangs geschaltet. Der Vorwiderstandswert des LED-Strangs in Fig. 5 fällt entsprechend. Mit fallendem Vorwiderstandswert des LED-Strangs steigt der Strom durch jede Halbleiterlichtquelle L1, L2 im LED-Strang. Wegen der Halbleiterlichtquellen eigenen Proportionalität ihrer Lichtabstrahlung zum Stromdurchfluss durch sie hindurch steigt damit auch die Lichtintensität.

Hiernach kann die Fahrzeugleuchte erfindungsgemäß mindestens einen zumindest schaltbar in Reihe zu wenigstens einer Halbleiterlichtquelle L1, L2 des diese umfassenden, zur Erfüllung zumindest einer Lichtfunktion der Fahrzeugleuchte vorgesehenen Leuchtmittels angeordneten Vorwiderstand R1 umfassen. Ein Mikrocontroller steuert einen vorzugsweise durch einen Transistor verwirklichten und/oder einen Transistor umfassenden Schalter S1 an. Der Schalter S1 verschaltet in einer ersten Ansteuerungsstellung einen die Stromstärke beziehungsweise den Stromdurchfluss entsprechend dem Normalwert regelnden Vorwiderstand R1 in Reihe zu der wenigstens einen Halbleiterlichtquelle L1, L2. Der Schalter S1 verschaltet in einer zweiten Ansteuerungsstellung einen die Stromstärke beziehungsweise den Stromdurchfluss entsprechend dem überhöhten Wert regelnden, anderen Vorwiderstand R2 vorzugsweise parallel zu dem Vorwiderstand R1 in Reihe zu der wenigstens einen Halbleiterlichtquelle L1, L2. Alternativ oder zusätzlich kann der Schalter in der zweiten Ansteuerungsstellung den die Stromstärke beziehungsweise den Stromdurchfluss entsprechend dem Normalwert regelnden Vorwiderstand R1 überbrücken.

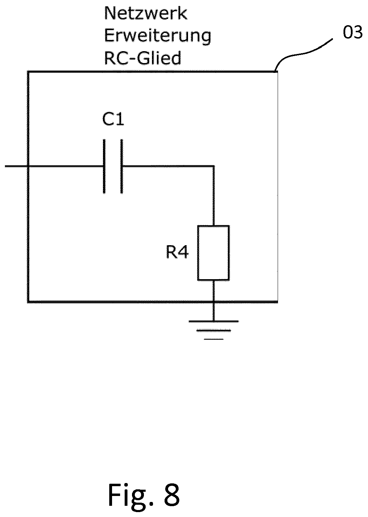

Eine weitere Möglichkeit zur Einstellung des Lichtintensitätsverlaufes während des Einschaltvorganges besteht in einer Erweiterung des Schaltungsaufbaus mit diskreten elektronischen Bauteilen wie beispielsweise Widerständen, Induktivitäten und Kondensatoren C1 (Fig. 8). Durch geeignete Beschaltung und Auswahl der Bauteilwerte können bevorzugt bei einem LED-Treiber 02 mit stromgesteuerter Stromquelle insbesondere exponentielle Verläufe erzeugt werden.

Eine weitere Möglichkeit der Lichtintensitätsvariation kann mithilfe eines LED-Treibers 02 erreicht werden, welcher als stromgesteuerte Stromquelle fungiert. Fig. 7 zeigt schematisch den Schaltungsaufbau, wodurch ein Referenzstrom IRef den LED-Strangstrom ILED steuert. Durch eine Netzwerkerweiterung 03 im Referenzstrompfad IRef kann der Strangstrom ILED variiert werden. Die Netzwerkerweiterung 03 kann beispielsweise wie in Fig. 6 dargestellt oder wie in Fig. 8 als RC-Glied diskret mit einem Widerstand R4 und Kondensator C1 aufgebaut werden. Dadurch wird ein exponentieller Verlauf des Referenzstromes und somit der Lichtintensität erreicht. Durch geeignete Wahl der Bauteilwerte des Widerstandes R4 und der Kapazität C1 kann die exponentielle Abfalldauer eingestellt werden.

Zusammengefasst können die kurz als Stromstärkesteuerungsmittel 01 bezeichneten, die die Stromstärke beziehungsweise den Stromdurchfluss durch die wenigstens eine Halbleiterlichtquelle steuernden Mittel zumindest einen Kondensator C1 und/oder wenigstens eine Induktivität umfassen.

Unter Induktivität sind hierbei passive elektrische und elektronische Bauelemente mit festem oder einstellbarem Induktivitätswert zusammengefasst. Der sowohl von der Hersteller- als auch von der Anwenderseite in der Elektronikindustrie verwendete Begriff umfasst induktive Bauelemente wie Spulen, Übertrager und Baluns sowie Drosseln und Transformatoren.

Der Kondensator C1 und/oder die Induktivität sind vorzugsweise speziell dafür da, den Stromdurchfluss zu beeinflussen, beispielsweise indem der Kondensator C1 und/oder die Induktivität entweder direkt im LED Strang vorhanden ist, oder indem der Kondensator C1 und/oder die Induktivität indirekt im Referenzstrompfad eines LED Treibers vorhanden ist. Ein überraschender Nebeneffekt ist, dass hierdurch die Spannungsversorgung des LED-Treibers stabilisiert wird.

Ein vorzugsweise durch einen Transistor verwirklichter und/oder einen Transistor umfassender Schalter kann zur Verwirklichung der Erfindung alternativ einen Kondensator beispielsweise in einer ersten von dem Mikrocontroller gesteuerten Ansteuerungsstellung mit einer Versorgungsspannung - typischerweise eine Bordnetzspannung eines mit der Fahrzeugleuchte ausgestatteten Fahrzeugs - beispielsweise parallel zu der mindestens einen Halbleiterlichtquelle L1, L2 des diese umfassenden, zur Erfüllung zumindest einer Lichtfunktion der Fahrzeugleuchte vorgesehenen Leuchtmittels verschalten, und in einer zweiten von dem Mikrocontroller gesteuerten Ansteuerungsstellung mit mindestens einer Halbleiterlichtquelle L1, L2 des diese umfassenden, zur Erfüllung zumindest einer Lichtfunktion der Fahrzeugleuchte vorgesehenen Leuchtmittels in Reihe verschalten. Ist beispielsweise ein Vorwiderstand in Reihe zu der mindestens einen Halbleiterlichtquelle L1, L2 des diese umfassenden, zur Erfüllung zumindest einer Lichtfunktion der Fahrzeugleuchte vorgesehenen Leuchtmittels verschaltet, so kann der Kondensator in der zweiten Ansteuerungsschaltung parallel zu diesem verschaltet werden. Hierdurch überbrückt der Kondensator in der zweiten Ansteuerungsschaltung den Vorwiderstand so lange, bis der Kondensator durch die Halbleiterlichtquelle L1, L2 hindurch entladen ist. Hierdurch entlädt sich der Kondensator in der zweiten Ansteuerungsstellung mit zunächst voller Versorgungsspannung, wobei im Anschluss hieran die Stromstärke durch den Vorwiderstand geregelt wieder dem Normalwert entspricht. Die Größe des Kondensators bestimmt hierbei die Dauer der Entladung und damit entsprechend die Zeit des Anliegens des erhöhten Werts der Stromstärke. Alternativ oder zusätzlich kann eine Induktivität verschaltet werden, die beispielsweise durch Trennung von der Versorgungsspannung eine höhere Spannung an dem Kondensator zur Anlage kommen lässt. Eine Induktivität umfasst in diesem Zusammenhang auch Elektronikbauteile sowie einen Schaltungsaufbau aus mehreren Elektronikbauteilen, welche von einer Versorgungspannung zumindest kurzzeitig eine höhere Spannung erzeugen. Zu den besagten Elektronikbauteilen zählen neben den bereits erwähnten ohmschen Widerständen, Kondensatoren und Induktivitäten auch Dioden, wie etwa LEDs, Halbleiterbauelemente, wie etwa Transistoren, Thyristoren, etc..

Die die Stromstärke beziehungsweise den Stromdurchfluss durch die wenigstens eine Halbleiterlichtquelle L1, L2 steuernden Mittel können Teil einer elektronischen Steuerschaltung sein.

Zum Betrieb sowohl von LEDs, als auch von OLEDs als Lichtquellen für ein Leuchtmittel beispielsweise einer Fahrzeugleuchte können eine oder mehrere mehr oder minder komplexe elektronische Steuerschaltungen vorgesehen sein, die beispielsweise auf einem oder mehreren Leuchtmittelträgern des Leuchtmittels angeordnet und beispielsweise in dem Leuchteninnenraum beherbergt sein können.

Ein einfaches Beispiel für eine elektronische Steuerschaltung betrifft die Angleichung unterschiedlicher Helligkeiten einzelner LEDs oder von LED-Strängen innerhalb einer Gruppe gemeinsam betriebener, auf einem oder mehreren Leuchtmittelträgern angeordneter LEDs. Eine solche elektronische Steuerschaltung besteht aus mindestens einem oder mehreren Vorwiderständen zur Anpassung der Vorwärtsspannung der LEDs an das Bordnetz. Beispielsweise ist bekannt, die LEDs im so genannten Binning nach Vorwärtsspannung und Intensität zu sortieren. Um Unterschiede zwischen mehreren LED-Strängen auszugleichen, die jeweils aus in Reihe geschalteten LEDs gleicher Vorwärtsspannung und Intensität bestehen, und um eine homogene Helligkeitsverteilung der benachbarten LED-Stränge aus LEDs mit unterschiedlicher Vorwärtsspannung und Intensität zu erhalten, wird zumindest jeder LED-Strang mit einem anderen Vorwiderstand versehen.

LEDs sowie OLDEs bedürfen darüber hinaus beim Einsatz als Lichtquelle insbesondere in Fahrzeugleuchten oft einer separaten Ausfallerkennung. Dies ist bedingt durch die geringe Leistungsaufnahme von LEDs und OLEDs im Allgemeinen. Beispielsweise ist ein in einem Fahrzeug untergebrachtes Steuergerät nicht in der Lage, eine dem Ausfall einer oder weniger LEDs oder OLEDs entsprechende Änderung der Leistungsentnahme aus dem Bordnetz zu erkennen, da eine hieraus resultierende Bordnetzspannungsänderung unterhalb der im normalen Betrieb eines Fahrzeugs auftretenden Bordnetzspannungsschwankungen liegt. Eine beispielsweise in der Fahrzeugleuchte untergebrachte elektronische Schaltungsanordnung zur Ausfallerkennung erfasst den Ausfall einer oder mehrerer Leuchtdioden in der Fahrzeugleuchte z.B. mittels eines oder mehrerer Komparatoren und teilt dies dem Steuergerät mit. Diese elektronische Schaltungsanordnung zur Ausfallerkennung kann durch eine beispielsweise auf dem Leuchtmittelträger aufgebrachte elektronische Steuerschaltung verwirklicht sein.

Darüber hinaus können sowohl LEDs, als auch OLEDs weiterer elektronischer Steuerschaltungen bedürfen. Beispiele hierfür sind elektronische Steuerschaltungen:
- zur Regelung und/oder Steuerung der Helligkeit bzw. Leuchtkraft der LEDs und/oder OLEDs, beispielsweise durch eine pulsweitenmodulierte Taktung der Stromversorgung für einen außerhalb des für das menschliche Auge wahrnehmbaren Bereichs gepulsten Betrieb,
- zur Kompensation oder Vermeidung elektromagnetischer Störungen, beispielsweise aufgebaut aus Kondensatoren und/oder Ferriten,
- zum Schutz der LEDs und/oder OLEDs z.B. vor einer Überspannung des Bordnetzes oder vor fehlerhafter Polung, beispielsweise umfassend eine oder mehrere Zenerdioden.

Zusammengefasst muss für fast alle LED- und/oder OLED-Anwendungen eine mehr oder minder umfangreiche, für die speziellen LEDs und/oder OLEDs ausgelegte elektronische Steuerschaltung z.B. auf den mindestens einen Leuchtmittelträger aufgebracht werden. Die elektronische Steuerschaltung umfasst im einfachsten Fall einen Vorwiderstand und eine Schutzdiode, kann aber je nach Anwendung auch wesentlich mehr Elektronikbauteile enthalten, wie z.B. Mikrokontroller bzw. Kontroller, Komparatoren, Transistoren, Schutzdioden, elektrische Widerstände z.B. als Vorwiderstand, Kondensatoren, Ferrite, etc..

Somit umfasst ein Leuchtmittel mit einer oder mehreren LED und/oder OLED als Lichtquelle meist zusätzlich zu einer oder mehreren aufgrund ihres Diodenaufbaus Elektronikbauteile darstellenden LEDs und/oder OLEDs zumindest ein weiteres zuvor genanntes Elektronikbauteil. Demnach kann ein Leuchtmittel mit einer oder mehreren LEDs und/oder OLEDs als Lichtquellen neben der mindestens einen LED und/oder OLED zumindest noch über ein weiteres Elektronikbauteil verfügen.

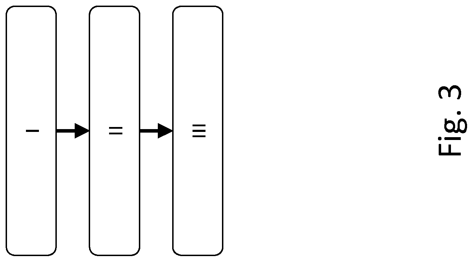

Eine voranstehend beschriebene Fahrzeugleuchte kann gemäß eines nachfolgend beschriebenen und in Fig. 3 in seinem Ablauf ganz oder teilweise dargestellten Verfahrens betrieben werden.

Ein solches Verfahren zum Betrieb einer Fahrzeugleuchte mit mindestens einer vermittels wenigstens eines Leuchtmittels mit zumindest einer eine einer Stromstärke beziehungsweise einem Stromdurchfluss durch sie hindurch proportionale Lichtabstrahlung bzw. -abgabe aufweisenden Halbleiterlichtquelle L1, L2 ganz oder teilweise verwirklichten Lichtfunktion sieht in einem ersten Verfahrensschritt I ein Einschalten bzw. Aktivieren einer vermittels wenigstens einem Leuchtmittel mit zumindest einer eine einer Stromstärke beziehungsweise einem Stromdurchfluss durch sie hindurch proportionale Lichtabstrahlung bzw. -abgabe aufweisenden Halbleiterlichtquelle L1, L2 ganz oder teilweise verwirklichten Lichtfunktion vor.

In einem sich an den ersten Verfahrensschritt I unmittelbar anschließenden zweiten Verfahrensschritt II sieht das Verfahren vor, dass mit dem Einschalten bzw. Aktivieren zu Beginn einer vermittels wenigstens einer Halbleiterlichtquelle L1, L2 ganz oder teilweise verwirklichten Lichtfunktion die Halbleiterlichtquelle L1, L2 zunächst mit einem überhöhten Wert der Stromstärke beziehungsweise des Stromdurchflusses anstelle eines zum Erreichen einer beispielsweise gesetzlichen Vorgabe ausreichenden Normalwerts beaufschlagt wird.

Der überhöhte Wert liegt vorzugsweise aber immer noch in dem Bereich, bei dem die Lichtstärke der durch das die Halbleiterlichtquelle umfasste Leuchtmittel erfüllten Lichtfunktion oder zu deren Erfüllung das die Halbleiterlichtquelle umfasste Leuchtmittel beiträgt, gleich oder kleiner als der gesetzlich zulässige Maximalwert ist.

Das Verfahren sieht demnach vor, mit dem Einschalten bzw. Aktivieren zu Beginn einer vermittels wenigstens einer Halbleiterlichtquelle ganz oder teilweise verwirklichten Lichtfunktion die Halbleiterlichtquelle zunächst mit einem überhöhten Wert der Stromstärke beziehungsweise des Stromdurchflusses anstelle eines zum Erreichen einer beispielsweise gesetzlichen Vorgabe ausreichenden Normalwerts zu beaufschlagen.

Das Verfahren sieht in einem auf den zweiten Verfahrensschritt II folgenden dritten Verfahrensschritt III bevorzugt vor, den Stromdurchfluss durch die mindestens eine Halbleiterlichtquelle L1, L2 von dem überhöhten Wert auf den zum Erreichen der beispielsweise gesetzlichen Vorgabe ausreichenden Normalwert abzusenken.

Dabei kann das Verfahren im dritten Verfahrensschritt III vorsehen, die Strombeaufschlagung im Anschluss an den überhöhten Wert entsprechend einer beispielsweise gesetzlich vorgegebenen Lichtabstrahlung zu steuern.

Wichtig ist hervorzuheben, dass die Steuerung der Strombeaufschlagung im dritten Verfahrensschritt III im Anschluss an den überhöhten Wert im zweiten Verfahrensschritt II vorgegebene Zeitintervalle des Stromdurchflusses und dazwischen liegender Pausen umfassen kann.

Dabei kann nach jeder Pause zunächst der überhöhte Wert anliegen.

Mit jedem beispielsweise durch Neueinschalten stattfindenden Beginn der Lichtfunktion kann zumindest zunächst der überhöhte Wert vorgesehen sein.

Bei wiederkehrenden Lichtfunktionen, wie etwa einer Wiederholblinklichtfunktion, kann mit jedem zyklisch wiederkehrenden Aufleuchten zumindest zunächst der überhöhte Wert vorgesehen sein.

Das Verfahren kann alternativ oder zusätzlich vorsehen, dass bei Aktivierung einer Lichtfunktion, die entweder wiederkehrende Pausen aufweist, während denen die Strombeaufschlagung einer oder mehrerer Halbleiterlichtquellen eines die Lichtfunktion verwirklichenden Leuchtmittels unterbrochen ist, so dass während der Verwirklichung der Lichtfunktion eine oder mehrere Halbleiterlichtquellen in zeitlicher Folge nacheinander aufleuchten, oder die durch ein Leuchtmittel mit mehreren zeitlich versetzt nacheinander strombeaufschlagte Halbleiterlichtquellen verwirklicht ist, der überhöhte Wert mit fortschreitender Zeit abgesenkt wird.

Hierdurch blitzt die Lichtfunktion zu Beginn stärker auf, als zu einem späteren Zeitpunkt, um deren Wahrnehmungskraft unmittelbar zu Beginn maximal zu erhöhen.

Mit jedem Aufblitzen wird das Aufblitzen abgeschwächt, bis es schließlich vom menschlichen Auge nicht mehr wahrnehmbar ist.

Es kann eine Tag- und Nachtfunktion verwirklicht werden, mit stärkerer Lichtintensität bei Tag.

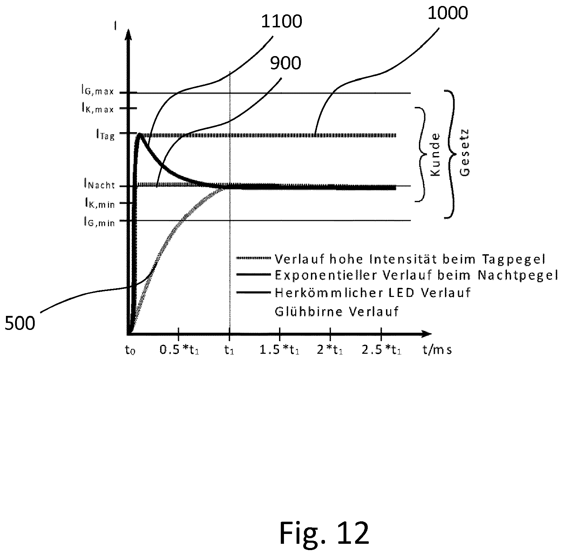

Fig. 12 zeigt den Einschaltvorgang für eine Lichtfunktion mit variabler Intensität. Die ausgesandte Lichtstärke wird dabei abhängig von der Umgebungshelligkeit geregelt. Bei durch die Kurve 900 dargestelltem Intensitätsverlauf eines so genannten Nacht- oder Low-Pegels während geringer Umgebungshelligkeit leuchtet die Lichtfunktion mit geringerer Intensität als bei durch die Kurve 1000 dargestelltem Intensitätsverlauf eines so genannten Tag- oder High-Pegels während hoher Umgebungshelligkeit. Gemäß diesem Ausführungsbeispiel wird die erfindungsgemäße Lichtfunktion, beispielsweise eine Bremslichtfunktion, nur beim Nachtpegel mit erhöhter Einschaltintensität aktiviert, entsprechend dem durch die Kurve 1100 dargestellten Intensitätsverlauf. Dies hat den Vorteil, dass die maximale Lichtstärke der beispielsweise durch LEDs verwirklichten Halbleiterlichtquellen L1, L2 nur auf die Lichtstärke des Tagpegels ausgelegt werden müssen, wie dies beim Stand der Technik ebenfalls der Fall ist. Somit sind die Zusatzkosten gegenüber dem Stand der Technik gering, wenn die erhöhte Einschaltintensität nur im Nachtmodus aktiviert wird. Der Intensitätsverlauf während des Einschaltvorgangs einer Glühlampe ist zum Vergleich durch die fein punktierte Kurve 500 dargestellt.

Die Umsetzung der erfindungsgemäßen hohen Einschaltintensität muss nicht zwingend für alle Einschaltvorgänge eines Lichtsignals erfolgen. So ist es beispielsweise vorstellbar die erfindungsgemäße hohe Einschaltintensität nur dann einzusetzen, wenn die Lichtfunktion im helligkeitsreduzierten Nachtmodus aktiviert wird. Beim Fahrtrichtungsanzeiger kann es als sinnvoll angesehen werden nur beim ersten Aufleuchten des Blinklichts die Einschaltintensität zu erhöhen, nicht jedoch beim Widerholen des Blinkens.

Sowohl bei einer durch die voranstehend beschriebene Fahrzeugleuchte verwirklichten Lichtfunktion, als auch bei einer Lichtfunktion, die gemäß eines zuvor beschriebenen Verfahrens zum Betrieb einer Fahrzeugleuchte mit mindestens einer vermittels wenigstens eines Leuchtmittels mit zumindest einer eine einer Stromstärke beziehungsweise einem Stromdurchfluss durch sie hindurch proportionale Lichtabstrahlung bzw. -abgabe aufweisenden Halbleiterlichtquelle L1, L2 ganz oder teilweise verwirklichten Lichtfunktion verwirklicht wird, kann es sich um eine dynamische Lichtfunktion handeln.

Die dynamische Lichtfunktion ist vermittels mehrerer einzeln oder gruppenweise ansteuerbarer Halbleiterlichtquellen L1, L2 verwirklicht, die bei Aktivierung des die Lichtfunktion erfüllenden und/oder der Erfüllung der Lichtfunktion zumindest beitragenden Leuchtmittels zumindest teilweise zeitlich versetzt nacheinander aufleuchten.

Jede Halbleiterlichtquelle L1, L2 wird bei ihrem Aufleuchten im Verlauf der dynamischen Lichtfunktion zumindest zunächst mit einem überhöhten Wert der Stromstärke beziehungsweise des Stromdurchflusses anstelle eines zum Erreichen einer beispielsweise gesetzlichen Vorgabe ausreichenden Normalwerts beaufschlagt.

Die Halbleiterlichtquellen L1, L2 können bei einem zumindest zeitweiligen Beenden der dynamischen Lichtfunktion, beispielsweise dem Abschalten der dynamischen Lichtfunktion oder der kurzzeitigen Unterbrechung der dynamischen Lichtfunktion, etwa einer Wiederholblinklichtfunktion, gleichzeitig alle gemeinsam erlöschen.

Bis dahin, bis zu dem gemeinsamen Erlöschen, können die der Verwirklichung der dynamischen Lichtfunktion zumindest beitragenden Halbleiterlichtquellen L1, L2 nach der anfänglichen Beaufschlagung mit dem überhöhten Wert mit dem Normalwert der Stromstärke beziehungsweise des Stromdurchflusses weiterbetrieben werden.

Der überhöhte Wert kann mit jeder im Zuge der Verwirklichung einer dynamischen Lichtfunktion neu aufleuchtenden Halbleiterlichtquelle L1, L2 oder im Zuge der Verwirklichung einer dynamischen Lichtfunktion neu aufleuchtenden Gruppe von Halbleiterlichtquellen L1, L2 herabgesetzt werden.

Ein Beispiel für eine dynamische Lichtfunktion liegt durch Verwirklichung eines dynamischen Fahrtrichtungsanzeigers, einem so genannten wischenden Blinker, vor. Dieser kann so gestaltet werden, dass die Einschaltintensität der durch Einschalten jeweils einer oder mehrerer Halbleiterlichtquellen L1, L2 einzelnen nacheinander aufleuchtenden Segmente unterschiedlich gewählt wird. So kann die Helligkeit des ersten Segments so stark erhöht werden, dass die gesamte Lichtstärke beim Aufleuchten höher als im voll eingeschalteten Zustand ist. Es besteht jedoch auch die Möglichkeit, durch eine höhere Einschaltintensität einzelner Segmente lediglich die fehlende Lichtstärke noch nicht aktivierter Segmente zu kompensieren. Eine solche durch eine Fahrzeugleuchte verwirklichte Lichtfunktion kombiniert die schnellere Erkennbarkeit der Abbiegerichtung durch das Wischen des Fahrtrichtungsanzeigers mit sofortiger voller Helligkeit beim Aufleuchten.

Vorteilhaft kann das Verfahren vorsehen, dass der überhöhte Wert mit zunehmender Anzahl von aktivierten Halbleiterlichtquellen L1, L2 beispielsweise eines zur Verwirklichung einer dynamischen Lichtfunktion vorgesehenen Leuchtmittels und damit einhergehend zunehmender Leuchtfläche abnimmt, beispielsweise bis er mit der Strombeaufschlagung der letzten Halbleiterlichtquelle L1, L2 des zur Verwirklichung einer dynamischen Lichtfunktion vorgesehenen Leuchtmittels den Normalwert einnimmt.

Beispielsweise kann der überhöhte Wert linear mit zunehmender Anzahl aktivierter Halbleiterlichtquellen L1, L2 abnehmen.

Dies ist der zunehmenden Leuchtfläche geschuldet, die bei gleichbleibendem Lichtstrom je Flächeneinheit bereits zu einer Steigerung der Lichtintensität oder Lichtstärke führt.

Durch den mit zunehmender Anzahl aktivierter Halbleiterlichtquellen L1, L2 abnehmenden überhöhten Wert wird ein Glitzereffekt erhalten, der im zeitlichen Verlauf des Aufleuchtens der dynamischen Lichtfunktion abnimmt, quasi «nachhallt».

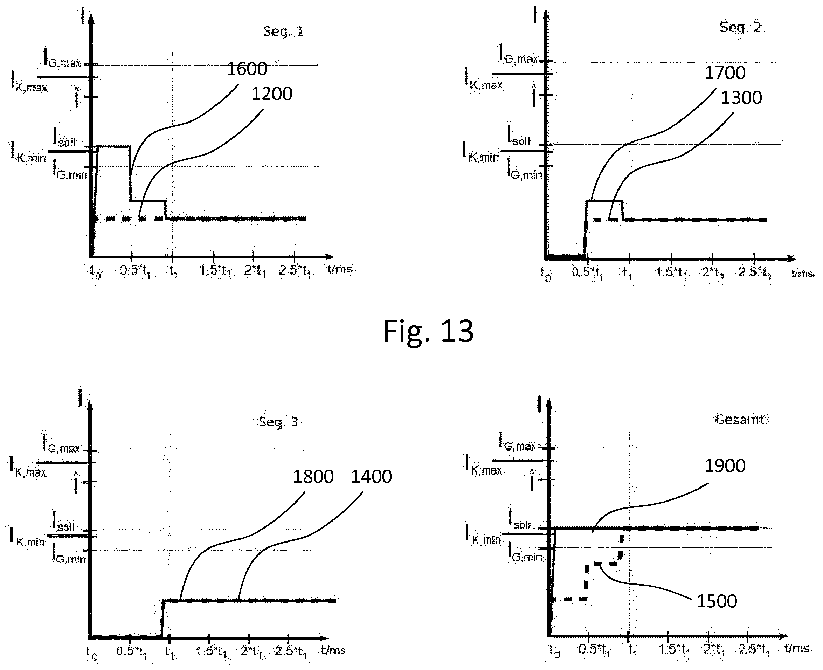

Fig. 13 zeigt einen Helligkeitsverlauf für einen durch eine dynamische Lichtfunktion verwirklichten Fahrtrichtungsanzeiger. Bei der für den Fahrtrichtungsanzeiger vorgesehenen dynamischen Lichtfunktion werden drei Segmente Seg. 1, Seg. 2, Seg. 3 nacheinander aktiviert. Gestrichelt dargestellt vermittels der Kurven 1200, 1300, 1400 ist jeweils die Lichtintensität der drei Segmente für eine Lichtfunktion nach dem Stand der Technik - getrennt voneinander für die drei Segmente Seg. 1, Seg. 2, Seg. 3 - und zusätzlich durch die Kurve 1500 die Lichtintensität der gesamten Leuchte (Gesamt) aufgetragen. Als durchgezogene Kurven 1600, 1700, 1800, 1900 sind jeweils die Lichtintensitäten für eine Leuchte mit erhöhter Einschaltintensität dargestellt. In diesem Beispiel wurde die Einschaltintensität nur genau so weit erhöht, dass sie die noch nicht aktivierten Segmente Seg. 2, Seg. 3 des dynamischen Fahrtrichtungsanzeigers kompensiert und damit insgesamt denselben Intensitätsverlauf (Kurve 1500 konventionell, Kurve 1900 erfindungsgemäß) wie ein herkömmlicher, nicht dynamischer Fahrtrichtungsanzeiger mit LED-Lichtquellen aufweist. Dadurch wird der Nachteil der geringen Anfangsintensität eines dynamischen Fahrtrichtungsanzeigers kompensiert. Selbstverständlich wäre es auch vorstellbar die Anfangsintensität des zuerst aktivierten Segments Seg. 1 so weit zu erhöhen, dass auch insgesamt eine erhöhte Einschaltintensität für die gesamte Lichtfunktion entsteht. Aus technischen oder Kostengründen wäre es auch vorstellbar die geringere Anfangsintensität eines dynamischen Fahrtrichtungsanzeigers nur teilweise zu kompensieren, wenn dadurch zum Beispiel kostengünstigere LEDs eingesetzt werden können. Auch eine Kombination mit einer kurz als Mehrpegelleuchte bezeichneten Leuchte mit variabler Intensität analog zum Ausführungsbeispiel in Fig. 12 ist möglich.

Darüber hinaus kann es insbesondere bei einem durch eine dynamische Lichtfunktion verwirklichten Fahrtrichtungsanzeiger (FRA) zielführend sein alle LEDs der Lichtfunktion zuerst aufblitzen zu lassen, ähnlich der nachfolgend noch erwähnten Kennleuchten für Blinklichter nach ECE-R65, und erst hieran zeitlich die wischende Funktionalität anzuschließen. Dadurch würde der Verkehrsteilnehmer durch das Aufblitzen mit erhöhter Intensität im ersten Moment auf die Signalfunktion besser aufmerksam gemacht. Durch die anschließende Wischfunktionalität würde er zusätzlich die Richtung des FRAs sicherer und schneller erkennen. Durch diese kombinierte Blitz- und Wischfunktionalität würde insgesamt die Verkehrssicherheit mit dieser Signalfunktion erhöht.

Innerhalb der ersten Sekunde kann die Lichtintensität durch so genanntes Pulsen mehrfach verändert werden.

Dies ist beispielsweise in Zusammenhang mit einer durch eine dynamische und/oder adaptive Lichtfunktion verwirklichte Bremslichtfunktion anwendbar.

Dieses sogenannte adaptive Bremslicht, auch aktives Bremslicht oder dynamisches Bremslicht genannt, kann in Kraft treten, wenn die Verzögerung des Fahrzeuges im Bremsvorgang ≥ 6 m/s² und die Geschwindigkeit > 50 km/h beträgt. Dabei blinkt die Bremslichtfunktion bei dieser Notbremsung mehrmals pro Sekunde auf um den nachfolgenden Verkehr besonders zu warnen. Entsprechend wird bei lediglich geringer Verzögerung im Bremsvorgang ≤ 2,5 m/s² die statische Funktion der Bremsleuchte aktiviert. Insbesondere für eine mittlere Verzögerung im Bremsvorgang mit einem Wert von > 2,5 m/s² und < 6 m/s² kann die höhere Einschaltintensität kombiniert mit einem bestimmte Intensitätsverlauf für die Leuchtenfunktionen zum Einsatz kommen, bevorzugt für das Bremslicht oder eine durch eine kurz auch als Blinker bezeichnete Wiederholblinklichtfunktion verwirklichte FRA bzw. eines Warnblinkers. Denkbar ist dabei unter anderem auch ein Springen zwischen zwei Lichtintensitätspegels um ein Aufblitzen der Leuchtenfunktion zu generieren. Bevorzugt kann zur Signalisierung eines Bremsvorganges mit mittlerer Verzögerung der Low-Pegel einen Wert von beispielsweise 50 % des High-Pegels annehmen, wodurch die Leuchtenfunktion während der Dauer des Low-Pegels nicht vollständig abgeschaltet ist. Somit ist eine Differenzierung zwischen leichtem, mittlerem und starkem Bremsvorgang möglich.

Die Dauer, Frequenz, Verlauf und der High- bzw. Low-Pegel des Lichtintensitätswertes während des Einschaltvorganges kann abhängig der Geschwindigkeit und der Verzögerung dynamisch angesteuert werden um dem nachfolgenden Fahrzeug möglichst genau die Verzögerung des Bremsvorganges des vorausfahrenden Fahrzeuges zu signalisieren.

Fig. 9 stellt einen weiteren möglichen Intensitätsverlauf der Leuchtenfunktion im Einschaltvorgang dar. Dabei wird innerhalb des Zeitintervalles t0 bis t1 die Lichtintensität zwischen I = 0 cd und Î stufenförmig ein- und ausgeschaltet. Dadurch entsteht ein Aufblitzen der Leuchtenfunktion im Einschaltvorgang, wie durch die punktierte Kurve 800 dargestellt, welches vergleichbar mit Warnsignalen von Kennleuchten ist. Insbesondere kann das Verhältnis des Ein- und Auszustandes beliebig variiert werden, beispielsweise ist ein Schaltvorgang aus Lang - Kurz - Lang - Kurz ebenfalls denkbar. Hieraus resultiert eine Steigerung der Erkennbarkeit für die jeweilige Leuchtenfunktion um die Sicherheit im Straßenverkehr zu erhöhen. Zwischen dem kurzen Aufblitzen kann der Intensitätsverlauf innerhalb des Zeitintervalls, den eine Glühlampe um Licht in voller Lichtstärke abzustrahlen benötigt, durch die Verwendung von Halbleiterlichtquellen L1, L2 bis auf Null abfallen. Der Intensitätsverlauf während des Einschaltvorgangs einer Glühlampe ist zum Vergleich durch die fein punktierte Kurve 500 dargestellt.

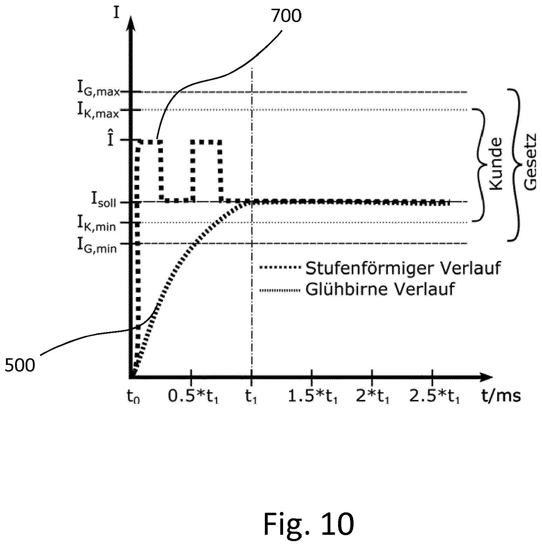

Des Weiteren ist ein Verlauf gemäß Fig. 10 denkbar, in welchem der so genannte Low-Pegel als niedrigster Intensitätswert während des Einschaltvorgangs wie durch die punktierte Kurve 700 dargestellt lediglich auf einen Lichtintensitätswert Isoll fällt um innerhalb des gesetzlichen und kundenspezifischen Lichtintensitätsbereiches zu verlaufen. Der zum Vergleich durch die fein punktierte Kurve 500 dargestellte Intensitätsverlauf während des Einschaltvorgangs einer Glühlampe liegt deutlich niedriger.

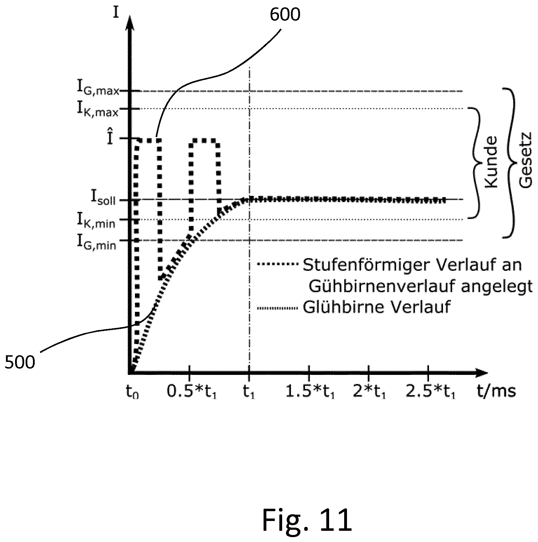

Die Ausführung des in Fig. 11 dargestellten Intensitätsverlaufs stellt sicher, dass der stufenförmige Verlauf gemäß der gepunkteten Kurve 600, der stets oberhalb des durch die fein punktierte Kurve 500 dargestellten, herkömmlichen Glühbirnenintensitätsverlaufes liegt, auch die schon durch die Glühlampentechnologie erfüllten Minimalwerte, insbesondere auch minimale gesetzliche Lichtintensitätswerte im Einschaltzeitraum erfüllt werden.

Zusätzlich kann es zielführend sein die Wahrnehmung für das Lichtsystem, wie etwa für die Bremslichtfunktion (BRL) und/oder eine Wiederholblinklichtfunktion zur Fahrtrichtungsanzeige (FRA) beispielsweise mittels eines vorangestellten, intensitätserhöhten Doppel- oder Trippelblitzes zu steigern. Diese Möglichkeit des Blitzens wird auch bei aktuellen Kennleuchten für Blinklichter von Einsatzfahrzeugen, wie etwa Blaulicht der Polizei, Krankenwagen oder Feuerwehr, aber auch gelbes Blinklicht für beispielsweise Müllabfuhr, nach ECE-R65 verwendet. Hierbei sind verschiedene Warnsignalmuster denkbar, die kurzzeitig innerhalb weniger Sekunden, bevorzugt innerhalb weniger hundert Millisekunden beim Einschalten der Lichtfunktion gegebenenfalls unter Berücksichtigung von Rahmenbedingungen wie beispielsweise verwendete Bremskraft, Umgebungshelligkeit oder Fahrzeuggeschwindigkeit eingesetzt werden können.

Zusammengefasst schlägt die Erfindung zur Steigerung der Verkehrssicherheit durch Verbesserung der Wahrnehmbarkeit von Lichtfunktionen eine dynamische Veränderung der Lichtintensität von Lichtfunktionen, insbesondere einer Wiederholblinklichtfunktion und/oder einer Bremslichtfunktion, innerhalb der ersten Sekunde unmittelbar beim Einschalten der Lichtfunktion vor.

Hierdurch wird nachweislich die Aufmerksamkeit eines Betrachters angezogen. Durch Absenken der Intensität innerhalb der ersten Sekunde nach dem Einschalten auf das gängige Niveau wird eine Blendung vermieden.

Die Erfindung basiert auf der Erkenntnis, dass für eine geringe Reaktionszeit nur die Lichtintensität innerhalb der ersten Sekunde nach Aktivieren einer Lichtfunktion relevant sein kann. Eine Reaktion auf eine Lichtsignalfunktion umfasst jedoch wesentlich mehr, als das bloße erregen der visuellen Aufmerksamkeit und das visuelle Wahrnehmen des Aufleuchtens eines Lichtsignals. Das Lichtsignal muss erkannt werden, bewertet werden und eine passende Handlung ausgeführt werden. Es ist daher davon auszugehen, dass lediglich die Lichtstärke innerhalb der ersten wenigen Zehntelsekunden entscheidend für die Reaktionszeit ist.

Es ist ersichtlich, dass die Erfindung durch eine Lichtfunktion einer Fahrzeugleuchte, insbesondere einer Fahrzeugleuchte für ein Kraftfahrzeug, mit hoher Einschaltintensität verwirklicht sein kann.

Die Fahrzeugleuchte kann einzelne oder eine Kombination der zuvor und/oder nachfolgend in Verbindung mit dem Verfahren beschriebene Merkmale aufweisen, ebenso wie das Verfahren einzelne oder eine Kombination mehrerer zuvor und/oder nachfolgend in Verbindung mit der Fahrzeugleuchte beschriebene Merkmale aufweisen und/oder verwirklichen kann.

Die Fahrzeugleuchte und/oder das Verfahren können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Vorteile gegenüber dem Stand der Technik sind, dass die Erfindung der hohen Einschaltintensität folgende Sicherheitsmerkmale für den Straßenverkehr mit sich bringt:
- Kürzere Reaktionszeit bei der Erkennung einer Lichtfunktion durch am Straßenverkehr Beteiligte.
- Vermeidung oder Verringerung von Blendung.
- Kombination mit Mehrpegelleuchten möglich.
- Gesetzliche Vorgaben weiterhin erfüllt.
- Keine oder geringe Beeinflussung der thermischen Aspekte in einer Leuchte.

Ein Vorteil von LED-Leuchtmitteln im Vergleich zu thermischen Strahlern, wie beispielsweise Glühlampen, ist die kürzere Einschaltzeit. Durch eine zusätzlich kurzzeitig höhere Lichtintensität im Einschaltvorgang kann dieser Vorteil bekräftigt werden.

Insbesondere die Funktion des wischenden Blinkers besitzt zu Beginn des Wischens nur wenige aktive LEDs und somit eine geringe Lichtintensität. Mit einer höheren Einschaltintensität entsteht beim Einschalten der Funktion eine höhere Lichtintensität und die Reaktionszeit kann verringert werden.

Vor allem bei der Funktion der Bremsleuchte ist eine Verringerung der Reaktionszeit für deren Erkennung besonders vorteilhaft, um frühzeitiger auf den Bremsvorgang des vorangehenden Fahrzeuges reagieren zu können und den Bremsweg zu verkürzen.

Wichtig ist zu erwähnen, dass in den Zeichnungen Fig. 4, Fig. 9, Fig. 10, Fig. 11, Fig. 12, Fig. 13, welche allesamt Intensitätsverläufe zeigen:
- IG,max die vom Gesetzgeber für eine Lichtfunktion erlaubte maximale Lichtintensität,
- IG,min die vom Gesetzgeber für eine Lichtfunktion mindestens vorgeschriebene Lichtintensität,
- IK,max die vom Kunden, vornehmlich einem Automobilhersteller, für eine Lichtfunktion gewünschte maximale Lichtintensität, und
- IK,min die vom Kunden, vornehmlich einem Automobilhersteller, für eine Lichtfunktion mindestens gewünschte Lichtintensität
bezeichnet.

Die Erfindung ist gewerblich insbesondere für Signalleuchten in Automobilen anwendbar.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Stromstärkesteuerungsmittel
- 02: LED-Treiber
- 03: Netzwerkerweiterung

- 100: Kurve
- 200: Kurve
- 300: Kurve
- 400: Kurve
- 500: Kurve (Glühbirne)
- 600: Kurve
- 700: Kurve
- 800: Kurve
- 900: Kurve
- 1000: Kurve
- 1100: Kurve
- 1200: Kurve
- 1300: Kurve
- 1400: Kurve
- 1500: Kurve
- 1600: Kurve
- 1700: Kurve
- 1800: Kurve
- 1900: Kurve

- C1: Kondensator

- I: Verfahrensschritt
- II: Verfahrensschritt
- III: Verfahrensschritt

- L1: Halbleiterlichtquelle
- L2: Halbleiterlichtquelle

- R1: Vorwiderstand
- R2: Zusätzlicher Widerstand
- R3: Widerstand
- R4: Widerstand

- S1: Schalter

- Seg. 1: Segment
- Seg. 2: Segment
- Seg. 3: Segment

## Patentansprüche

1. Fahrzeugleuchte mit mindestens einem wenigstens eine als eine Halbleiterlichtquelle (L1, L2) ausgeführte Lichtquelle umfassenden Leuchtmittel zur Erfüllung zumindest einer Lichtfunktion der Fahrzeugleuchte, umfassend den Stromdurchfluss durch die wenigstens eine Halbleiterlichtquelle (L1, L2) steuernde Mittel (01), welche beim Einschalten der durch die wenigstens eine Halbleiterlichtquelle (L1, L2) ganz oder teilweise verwirklichten Lichtfunktion den Stromdurchfluss durch die wenigstens eine Halbleiterlichtquelle (L1, L2) zunächst auf einen überhöhten Wert regeln und dann nach einer vorgegebenen und/oder vorgebbaren Zeitspanne den Stromdurchfluss von dem überhöhten Wert auf einen Normalwert absenken.

2. Fahrzeugleuchte nach Anspruch 1, wobei die wenigstens eine Halbleiterlichtquelle (L1, L2), deren Stromdurchfluss von den Stromstärkesteuerungsmitteln gesteuert wird, Teil eines zur Verwirklichung einer dynamischen Lichtfunktion vorgesehenen Leuchtmittels ist.

3. Fahrzeugleuchte nach Anspruch 1 oder 2, wobei die den Stromdurchfluss durch die wenigstens eine Halbleiterlichtquelle (L1, L2) steuernden Mittel (01) einen Mikrocontroller umfassen.

4. Fahrzeugleuchte nach Anspruch 3, wobei sie mindestens einen zumindest schaltbar in Reihe zu wenigstens einer Halbleiterlichtquelle (L1, L2) des diese umfassenden Leuchtmittels angeordneten Vorwiderstand (R1) umfasst, wobei der Mikrocontroller einen Schalter (S1) ansteuert, welcher in einer ersten Ansteuerungsstellung einen den Stromdurchfluss entsprechend dem Normalwert regelnden Vorwiderstand (R1) in Reihe zu der wenigstens einen Halbleiterlichtquelle (L1, L2) verschaltet, und welcher in einer zweiten Ansteuerungsstellung einen den Stromdurchfluss entsprechend dem überhöhten Wert regelnden, anderen Vorwiderstand (R2) in Reihe zu der wenigstens einen Halbleiterlichtquelle (L1, L2) verschaltet und/oder in der zweiten Ansteuerungsstellung den den Stromdurchfluss entsprechend dem Normalwert regelnden Vorwiderstand (R1) überbrückt.

5. Fahrzeugleuchte nach Anspruch 3 oder 4, wobei die den Stromdurchfluss durch die wenigstens eine Halbleiterlichtquelle steuernden Mittel (01) zumindest einen Kondensator (C1) und/oder wenigstens eine Induktivität umfassen.

6. Verfahren zum Betrieb einer Fahrzeugleuchte mit mindestens einer vermittels wenigstens einer eine einem Stromdurchfluss durch sie hindurch proportionale Lichtabstrahlung aufweisenden Halbleiterlichtquelle (L1, L2) ganz oder teilweise verwirklichten Lichtfunktion, wobei mit dem Einschalten bzw. Aktivieren zu Beginn einer vermittels wenigstens einer Halbleiterlichtquelle (L1, L2) ganz oder teilweise verwirklichten Lichtfunktion die Halbleiterlichtquelle (L1, L2) zunächst mit einem überhöhten Wert des Stromdurchflusses anstelle eines Normalwerts beaufschlagt wird.

7. Verfahren nach Anspruch 6, wobei es anschließend vorsieht, den Stromdurchfluss von dem überhöhten Wert auf den Normalwert abzusenken.

8. Verfahren nach Anspruch 6 oder 7, wobei es vorsieht die Strombeaufschlagung im Anschluss an den überhöhten Wert entsprechend einer Lichtabstrahlung zu steuern.

9. Verfahren nach Anspruch 8, wobei die Steuerung der Strombeaufschlagung im Anschluss an den überhöhten Wert vorgegebene Zeitintervalle des Stromdurchflusses und dazwischen liegender Pausen umfasst.

10. Verfahren nach Anspruch 9, wobei nach jeder Pause zunächst der überhöhte Wert anliegt.

11. Verfahren nach einem der Ansprüche 6 bis 10, wobei bei Aktivierung einer Lichtfunktion, die entweder wiederkehrende Pausen aufweist, während denen die Strombeaufschlagung einer oder mehrerer Halbleiterlichtquellen eines die Lichtfunktion verwirklichenden Leuchtmittels unterbrochen ist, oder die durch ein Leuchtmittel mit mehreren zeitlich versetzt nacheinander strombeaufschlagte Halbleiterlichtquellen (L1, L2) verwirklicht ist, der überhöhte Wert mit fortschreitender Zeit abgesenkt wird.

12. Verfahren nach einem der Ansprüche 6 bis 11, wobei es sich bei der Lichtfunktion um eine dynamische Lichtfunktion handelt, welche vermittels mehrerer einzeln oder gruppenweise ansteuerbarer Halbleiterlichtquellen (L1, L2) verwirklicht ist, die bei Aktivierung der Lichtfunktion zumindest teilweise zeitlich versetzt nacheinander aufleuchten, und wobei jede Halbleiterlichtquelle (L1, L2) bei ihrem Aufleuchten zunächst mit einem überhöhten Wert des Stromdurchflusses beaufschlagt wird.

13. Verfahren nach Anspruch 12, wobei die Halbleiterlichtquellen (L1, L2) bei einem zumindest zeitweiligen Beenden der Lichtfunktion gemeinsam erlöschen, und bis dahin nach der anfänglichen Beaufschlagung mit dem überhöhten Wert mit dem Normalwert des Stromdurchflusses weiterbetrieben werden.

14. Verfahren nach Anspruch 12 oder 13, wobei der überhöhte Wert mit jeder neu aufleuchtenden Halbleiterlichtquelle (L1, L2) oder Gruppe von Halbleiterlichtquellen (L1, L2) herabgesetzt wird.

15. Verfahren nach einem der Ansprüche 6 bis 14, wobei es zum Betrieb einer Fahrzeugleuchte nach einem der Ansprüche 1 bis 5 vorgesehen ist.

## Geänderte Patentansprüche

### Geänderte Patentansprüche gemäss Regel 137(2) EPÜ.

1. Verfahren zum Betrieb einer Fahrzeugleuchte mit mindestens einer vermittels wenigstens einer eine einem Stromdurchfluss durch sie hindurch proportionale Lichtabstrahlung aufweisenden Halbleiterlichtquelle (L1, L2) ganz oder teilweise verwirklichten Lichtfunktion, wobei mit dem Einschalten bzw. Aktivieren zu Beginn einer vermittels wenigstens einer Halbleiterlichtquelle (L1, L2) ganz oder teilweise verwirklichten Lichtfunktion die Halbleiterlichtquelle (L1, L2) zunächst mit einem überhöhten Wert des Stromdurchflusses anstelle eines Normalwerts beaufschlagt wird, wobei bei Aktivierung einer Lichtfunktion, die entweder wiederkehrende Pausen aufweist, während denen die Strombeaufschlagung einer oder mehrerer Halbleiterlichtquellen eines die Lichtfunktion verwirklichenden Leuchtmittels unterbrochen ist, oder die durch ein Leuchtmittel mit mehreren zeitlich versetzt nacheinander strombeaufschlagte Halbleiterlichtquellen (L1, L2) verwirklicht ist, der überhöhte Wert mit fortschreitender Zeit abgesenkt wird.

2. Verfahren nach Anspruch 1, wobei es anschließend vorsieht, den Stromdurchfluss von dem überhöhten Wert auf den Normalwert abzusenken.

3. Verfahren nach Anspruch 1 oder 2, wobei es vorsieht die Strombeaufschlagung im Anschluss an den überhöhten Wert entsprechend einer vorgegebenen Lichtabstrahlung zu steuern.

4. Verfahren nach Anspruch 3, wobei die Steuerung der Strombeaufschlagung im Anschluss an den überhöhten Wert vorgegebene Zeitintervalle des Stromdurchflusses und dazwischen liegender Pausen umfasst.

5. Verfahren nach Anspruch 4, wobei nach jeder Pause zunächst der überhöhte Wert anliegt.

6. Verfahren nach einem der Ansprüche 1 bis 5, wobei es sich bei der Lichtfunktion um eine dynamische Lichtfunktion handelt, welche vermittels mehrerer einzeln oder gruppenweise ansteuerbarer Halbleiterlichtquellen (L1, L2) verwirklicht ist, die bei Aktivierung der Lichtfunktion zumindest teilweise zeitlich versetzt nacheinander aufleuchten, und wobei jede Halbleiterlichtquelle (L1, L2) bei ihrem Aufleuchten zunächst mit einem überhöhten Wert des Stromdurchflusses beaufschlagt wird.

7. Verfahren nach Anspruch 6, wobei die Halbleiterlichtquellen (L1, L2) bei einem zumindest zeitweiligen Beenden der Lichtfunktion gemeinsam erlöschen, und bis dahin nach der anfänglichen Beaufschlagung mit dem überhöhten Wert mit dem Normalwert des Stromdurchflusses weiterbetrieben werden.

8. Verfahren nach Anspruch 6 oder 7, wobei der überhöhte Wert mit jeder neu aufleuchtenden Halbleiterlichtquelle (L1, L2) oder Gruppe von Halbleiterlichtquellen (L1, L2) herabgesetzt wird.

9. Verfahren nach einem der Ansprüche 1 bis 8, wobei es zum Betrieb einer Fahrzeugleuchte nach einem der Ansprüche 1 bis 5 vorgesehen ist.
